# EUROPEAN PATENT APPLICATION

(11) **EP 4 645 052 A1**
(43) Date of publication of application: **05.11.2025**
(21) Application number: 23927185.1
(22) Date of filing: 06.12.2023
(51) Int. Cl.: G06F 3/0488

(54) **SCREEN DISPLAY METHOD AND RELATED ELECTRONIC DEVICE**

(30) Priority: 15.03.2023 CN 202310278303
(71) Applicant: Honor Device Co., Ltd., Shenzhen, Guangdong 518040 (CN)
(72) Inventor: SUN, Yitian, Shenzhen, Guangdong 518040 (CN); PENG, Xukai, Shenzhen, Guangdong 518040 (CN)
(74) Representative: Goddar, Heinz J.
(86) International application number: PCT/CN2023/136762
(87) International publication number: WO 2024/187845

(57) **Abstract**

This application provides a screen display method and a related electronic device. The method includes: determining, based on a case whether both a floating window application and a current display interface application support top-bottom split-screen, whether to perform a screen splitting operation in a regular hot zone-based manner or an irregular hot zone-based manner. After the screen splitting operation starts, a View box for displaying animation effect content is obtained by adjusting a size and a location of a View box on a same layer. This avoids a problem of adding a new layer due to adding a View box, which leads to complex code and is inconducive to technical maintenance by a technician in a later period.

## Description

This application claims priority to Chinese Patent Application No. 202310278303.9, filed with the China National Intellectual Property Administration on March 15, 2023 and entitled "SCREEN DISPLAY METHOD AND RELATED ELECTRONIC DEVICE", which is incorporated herein by reference in its entirety.

### TECHNICAL FIELD

This application relates to the field of screen display, and in particular, to a screen display method and a related electronic device.

### BACKGROUND

In recent years, electronic devices such as a tablet computer and a foldable mobile phone are favored because of a large screen size and easy screen splitting, which allows a user to operate two applications on one screen, improving user experience. For example, for the tablet computer, a screen splitting function of the tablet computer may be used to perform left-right screen splitting on a video application and office software, so that a video playback interface and a text editing interface are simultaneously displayed on a screen of the tablet computer. In this way, the user can edit a document while watching a video by using the tablet computer, so that the user can enjoy both entertainment and leisure.

### SUMMARY

Embodiments of this application provide a screen display method and a related electronic device. This method resolves a problem that in a screen splitting process, an additional layer needs to be added to display a split-screen animation effect, which leads to complex code, and makes it difficult for a technician to perform technical maintenance in a later period.

According to a first aspect, an embodiment of this application provides a screen display method, applied to an electronic device having a display screen. The method includes: displaying a first interface, where a floating window is displayed in the first interface, the floating window includes a first control, the floating window is corresponding to a first application, and the first interface is corresponding to a second application; setting the floating window to a first mode in response to a first operation for the first control, where the first mode is a working mode in which the floating window is capable of moving on the display screen; if the first application and the second application are both applications supporting top-bottom split-screen and left-right split-screen, separately determining one or more hot zones in upper, lower, left, and right directions of a display region of the display screen; or if the first application and the second application are not both applications supporting top-bottom split-screen and left-right split-screen, separately determining one or more hot zones with a regular shape in the upper and lower directions or the left and right directions of the display region of the display screen; responding to a second operation for the first control, and moving a location of the floating window on the display screen; displaying a second interface when the first control moves to any hot zone range, where the second interface includes a first View box and a second View box, the first View box displays animation effect content of the first application, the second View box displays animation effect content of the second application, and the first View box and the second View box are on a same layer; and in a process of displaying the second interface, displaying a third interface in response to a third operation for the first control, where the third interface includes a first split-screen interface and a second split-screen interface, the first split-screen interface is corresponding to the first application, and the second split-screen interface is corresponding to the second application.

In the foregoing embodiment, the electronic device determines two different hot zone setting manners on the display screen based on a case that the first application and the second application support top-bottom split-screen and/or left-right split-screen. Then, when detecting that the first control is in any hot zone, the electronic device triggers a screen splitting operation, and then displays split-screen animation effect content. View boxes that display split-screen animation effect content are on the same layer. Therefore, a problem of a screen splitting operation in a conventional irregular hot zone-based manner is avoided, in which a View box with a new layer needs to be added to display split-screen animation effect content, which leads to complex code and is inconducive to maintenance by a technician in a later period.

With reference to the first aspect, in a possible implementation, the third interface further includes a split-screen switching control, and after the displaying a third interface, the method further includes: in response to a fourth operation for the split-screen switching control, if the third interface is a top-bottom split-screen interface, switching the third interface to a left-right split-screen interface; or if the third interface is a left-right split-screen interface, switching the third interface to a top-bottom split-screen interface. In this way, a user can switch left-right split-screen/top-bottom split-screen in an existing split-screen interface, which avoids performing tedious operations of "exiting current split-screen, dragging the floating window, and entering split-screen" because the user needs to switch split-screen, thereby improving user experience.

With reference to the first aspect, in a possible implementation, before the responding to a second operation for the second control, the method further includes: obtaining a first application identifier and a second application identifier, where the first application identifier is identification information of the first application, and the second application identifier is identification information of the second application; and determining whether both the first application identifier and the second application identifier are identification information in a first whitelist, where if yes, the first application and the second application are both applications supporting top-bottom split-screen and left-right split-screen; or if no, the first application and the second application are not both applications supporting top-bottom split-screen and left-right split-screen. In this way, a case that the first application and the second application support split-screen is determined in a whitelist-based manner, which helps the electronic device determine a hot zone setting manner based on the case that the first application and the second application support split-screen.

With reference to the first aspect, in a possible implementation, the display region of the display screen includes N rectangular-shaped View boxes, each View box includes top, bottom, left, and right sides, and a location and a range of each View box in the display region are represented by using four-dimensional coordinates (Xi, Yi, Zi, Ki), where Xi represents a distance between a left side of an ith View box and a first edge, Yi represents a distance between a right side of the ith View box and the first edge, Zi represents a distance between a top side of the ith View box and a second edge, and Ki represents a distance between a bottom side of the ith View box and the second edge, where the first edge is a side parallel to the left side and the right side of the display screen, the second edge is a side parallel to the top side and the bottom side of the display screen, and N is an integer greater than 1.

With reference to the first aspect, in a possible implementation, when the first application and the second application are both applications supporting top-bottom split-screen and left-right split-screen, the displaying a second interface specifically includes: obtaining first location information of the first control; calculating a first identifier based on the first location information; obtaining corresponding N four-dimensional coordinates of View boxes based on the first identifier; correspondingly adjusting a range of each View box on the display screen based on the N four-dimensional coordinates to obtain the first View box and the second View box; and displaying the animation effect content of the first application in the first View box, and displaying the animation effect content of the second application in the second View box.

With reference to the first aspect, in a possible implementation, when the first application and the second application are not both applications supporting top-bottom split-screen and left-right split-screen, the displaying a second interface specifically includes: obtaining first location information of the first control; obtaining a range of a hot zone on the display screen based on four-dimensional coordinates of the hot zone; when it is determined, based on the first location information, that the first control is in any hot zone, obtaining identification information of a hot zone in which the first control is located; obtaining corresponding N four-dimensional coordinates of View boxes based on the identification information; correspondingly adjusting a range of each View box on the display screen based on the N four-dimensional coordinates to obtain the first View box and the second View box; and displaying the animation effect content of the first application in the first View box, and displaying the animation effect content of the second application in the second View box.

With reference to the first aspect, in a possible implementation, the electronic device includes a split-screen animation effect management module, an animation effect box adjustment module, and an animation effect addition module, and if the first application and the second application are both applications supporting top-bottom split-screen and left-right split-screen, the displaying a second interface includes: The split-screen animation effect management module calculates a first identifier based on first location information of the first control; and
the split-screen animation effect management module sends a third notification message to the animation effect box adjustment module, where the third notification message includes the first identifier; the animation effect box adjustment module obtains corresponding four-dimensional coordinates of N View boxes based on the first identifier; the animation effect adjustment module adjusts corresponding ranges of the N View boxes on the display screen based on the four-dimensional coordinates of the N View boxes to obtain the first View box and the second View box; the animation effect adjustment module sends a fourth notification message to the animation effect addition module, where the fourth notification message includes the first identifier, a first mapping relationship between the first View box and the first application, and a second mapping relationship between the second View box and the second application; the animation effect addition module obtains the animation effect content of the first application and the animation effect content of the second application based on the first identifier; the animation effect addition module displays the animation effect content of the first application in the first View box based on the first mapping relationship; and the animation effect addition module displays the animation effect content of the second application in the second View box based on the second mapping relationship.

With reference to the first aspect, in a possible implementation, the electronic device includes a split-screen animation effect management module, an animation effect box adjustment module, and an animation effect addition module, and if the first application and the second application are not both applications supporting top-bottom split-screen and left-right split-screen, the displaying a second interface includes: The split-screen management module sends a third notification message to the animation effect box adjustment module when determining, based on first location information of the first control, that the first control is in a hot zone range, where the third notification message includes identification information of a hot zone in which the first control is located; the animation effect box adjustment module obtains corresponding four-dimensional coordinates of N View boxes based on the identification information; the animation effect adjustment module adjusts corresponding ranges of the N View boxes on the display screen based on the four-dimensional coordinates of the N View boxes to obtain the first View box and the second View box; the animation effect adjustment module sends a fourth notification message to the animation effect addition module, where the fourth notification message includes the identification information, a first mapping relationship between the first View box and the first application, and a second mapping relationship between the second View box and the second application; the animation effect addition module obtains the animation effect content of the first application and the animation effect content of the second application based on the identification information; the animation effect addition module displays the animation effect content of the first application in the first View box based on the first mapping relationship; and the animation effect addition module displays the animation effect content of the second application in the second View box based on the second mapping relationship.

With reference to the first aspect, in a possible implementation, the electronic device further includes a floating window movement module and a hot zone setting module of the first application, and before the displaying a second interface, the method further includes: The floating window movement module sends a first notification message to the hot zone setting module in response to the first operation, where the first notification message includes a first application identifier and a second application identifier, the first application identifier is identification information of the first application, and the second application identifier is identification information of the second application; the hot zone setting module determines whether both the first application identifier and the second application identifier are application identifiers in a first whitelist; and if yes, the hot zone setting module sends first hot zone information to the split-screen animation effect management module, where the first hot zone information is used to indicate that the first application and the second application are both applications supporting top-bottom split-screen and left-right split-screen; or if no, the hot zone setting module sends second hot zone information to the split-screen animation effect management module, where the second hot zone information is used to indicate that the first application and the second application are not both applications supporting top-bottom split-screen and left-right split-screen.

With reference to the first aspect, in a possible implementation, after that the hot zone setting module sends first hot zone information to the split-screen animation effect management module or after that the hot zone setting module sends second hot zone information to the split-screen animation effect management module, the method further includes: The floating window movement module sends a second notification message to the split-screen animation effect management module in response to the second operation, where the second notification message is used to prompt the split-screen animation effect management module to obtain the first location information of the first control; and the split-screen animation effect management module obtains the first location information of the first control in real time.

With reference to the first aspect, in a possible implementation, after the displaying a second interface, the method further includes: A floating window movement module sends a fifth notification message to the animation effect addition module in response to the third operation; the animation effect addition module sends a first indication message to the first application, where the first indication message includes the first identifier; the animation effect addition module sends a second indication message to the second application, where the second indication message includes the first identifier; the first application displays the first split-screen interface in the third interface based on the first identifier; and the second application displays the second split-screen interface in the third interface based on the first identifier.

With reference to the first aspect, in a possible implementation, after the displaying a second interface, the method further includes: A floating window movement module sends a fifth notification message to the animation effect addition module in response to the third operation; the animation effect addition module sends a first indication message to the first application, where the first indication message includes the identification information of the hot zone in which the first control is located; the animation effect addition module sends a second indication message to the second application, where the second indication message includes the identification information of the hot zone in which the first control is located; the first application displays the first split-screen interface in the third interface based on the identification information of the hot zone in which the first control is located; and the second application displays the second split-screen interface in the third interface based on the identification information of the hot zone in which the first control is located.

According to a second aspect, an embodiment of this application provides an electronic device, and the electronic device includes one or more processors, a display screen, and a memory. The memory is coupled to the one or more processors, the memory is configured to store computer program code, the computer program code includes computer instructions, and the one or more processors invoke the computer instructions to enable the electronic device to perform: displaying a first interface by using the display screen, where a floating window is displayed in the first interface, the floating window includes a first control, the floating window is corresponding to a first application, and the first interface is corresponding to a second application; setting the floating window to a first mode in response to a first operation for the first control, where the first mode is a working mode in which the floating window is capable of moving on the display screen; if the first application and the second application are both applications supporting top-bottom split-screen and left-right split-screen, separately determining one or more hot zones in upper, lower, left, and right directions of a display region of the display screen; or if the first application and the second application are not both applications supporting top-bottom split-screen and left-right split-screen, separately determining one or more hot zones with a regular shape in the upper and lower directions or the left and right directions of the display region of the display screen; responding to a second operation for the first control, and moving a location of the floating window on the display screen; displaying a second interface by using the display screen when the first control moves to any hot zone range, where the second interface includes a first View box and a second View box, the first View box displays animation effect content of the first application, the second View box displays animation effect content of the second application, and the first View box and the second View box are on a same layer; and in a process of displaying the second interface, displaying a third interface by using the display screen in response to a third operation for the first control, where the third interface includes a first split-screen interface and a second split-screen interface, the first split-screen interface is corresponding to the first application, and the second split-screen interface is corresponding to the second application.

With reference to the second aspect, in a possible implementation, the one or more processors invoke the computer instructions to enable the electronic device to perform: in response to a fourth operation for a split-screen switching control, if the third interface is a top-bottom split-screen interface, switching the third interface to a left-right split-screen interface; or if the third interface is a left-right split-screen interface, switching the third interface to a top-bottom split-screen interface.

With reference to the second aspect, in a possible implementation, the one or more processors invoke the computer instructions to enable the electronic device to perform: obtaining a first application identifier and a second application identifier, where the first application identifier is identification information of the first application, and the second application identifier is identification information of the second application; and determining whether both the first application identifier and the second application identifier are identification information in a first whitelist, where if yes, the first application and the second application are both applications supporting top-bottom split-screen and left-right split-screen; or if no, the first application and the second application are not both applications supporting top-bottom split-screen and left-right split-screen.

With reference to the second aspect, in a possible implementation, the one or more processors invoke the computer instructions to enable the electronic device to perform: obtaining first location information of the first control; calculating a first identifier based on the first location information; obtaining corresponding N four-dimensional coordinates of View boxes based on the first identifier; correspondingly adjusting a range of each View box on the display screen based on the N four-dimensional coordinates to obtain the first View box and the second View box; and displaying the animation effect content of the first application in the first View box by using the display screen, and displaying the animation effect content of the second application in the second View box by using the display screen.

With reference to the second aspect, in a possible implementation, the one or more processors invoke the computer instructions to enable the electronic device to perform: obtaining first location information of the first control; obtaining a range of a hot zone on the display screen based on four-dimensional coordinates of the hot zone; when it is determined, based on the first location information, that the first control is in any hot zone, obtaining identification information of a hot zone in which the first control is located; obtaining corresponding N four-dimensional coordinates of View boxes based on the identification information; correspondingly adjusting a range of each View box on the display screen based on the N four-dimensional coordinates to obtain the first View box and the second View box; and displaying the animation effect content of the first application in the first View box by using the display screen, and displaying the animation effect content of the second application in the second View box by using the display screen.

According to a third aspect, an embodiment of this application provides an electronic device, including a touch control screen, a camera, one or more processors, and one or more memories. The one or more processors are coupled to the touch control screen, the camera, and the one or more memories, the one or more memories are configured to store computer program code, and the computer program code includes computer instructions. When the one or more processors execute the computer instructions, the electronic device is enabled to perform the method according to any one of the first aspect or the possible implementations of the first aspect.

According to a fourth aspect, an embodiment of this application provides a chip system. The chip system is applied to an electronic device, the chip system includes one or more processors, and the one or more processors are configured to invoke computer instructions, so that the electronic device performs the method according to any one of the first aspect or the possible implementations of the first aspect.

According to a fifth aspect, an embodiment of this application provides a computer program product including instructions. When the computer program product is run on an electronic device, the electronic device is enabled to perform the method according to any one of the first aspect or the possible implementations of the first aspect.

According to a sixth aspect, an embodiment of this application provides a computer-readable storage medium, including instructions. When the instructions are run on an electronic device, the electronic device is enabled to perform the method according to any one of the first aspect or the possible implementations of the first aspect.

### BRIEF DESCRIPTION OF DRAWINGS

FIG. 1A-FIG. 1J are example diagrams of application scenarios according to an embodiment of this application;
FIG. 2A is an example diagram of hot zone distribution of an electronic device in a landscape mode according to an implementation of this application;
FIG. 2B is an example diagram of hot zone distribution of an electronic device in a portrait mode according to an implementation of this application;
FIG. 2C is an example diagram of View box distribution of an electronic device in a landscape mode according to an implementation of this application;
FIG. 2D is a layout diagram of View boxes in a display region of an electronic device according to an implementation of this application;
FIG. 3A is an example diagram of irregular hot zone division of an electronic device 100 according to an implementation of this application;
FIG. 3B-FIG. 3D are example diagrams of a group of user interfaces of an electronic device 100 according to an embodiment of this application;
FIG. 4 is a flowchart of a screen display method according to an embodiment of this application;
FIG. 5A is a layout diagram of View boxes in another display region of an electronic device according to an implementation of this application;
FIG. 5B is an example diagram of an electronic device in a landscape mode according to an implementation of this application;
FIG. 5C is an example diagram of an electronic device in a portrait mode according to an implementation of this application;
FIG. 6A to FIG. 6C are a diagram of interaction between modules in a screen display method according to an embodiment of this application;
FIG. 7A to FIG. 7C are a diagram of interaction between modules in another screen display method according to an embodiment of this application;
FIG. 8 is a schematic diagram of a hardware structure of an electronic device 100 according to an embodiment of this application;
FIG. 9A and FIG. 9B are a block diagram of a software structure of an electronic device 100 when a screen splitting operation is performed in an irregular hot zone-based manner according to an embodiment of this application; and
FIG. 10A and FIG. 10B are a block diagram of a software structure of an electronic device 100 when a screen splitting operation is performed in a regular hot zone-based manner according to an embodiment of this application.

### DESCRIPTION OF EMBODIMENTS

The following clearly and completely describes technical solutions in embodiments of this application with reference to the accompanying drawings in the embodiments of this application. Clearly, the described embodiments are merely some rather than all of the embodiments of this application. Mentioning an "embodiment" in this specification means that a specific feature, structure, or characteristic described with reference to this embodiment may be included in at least one embodiment of this application. The term appearing at various locations in this specification does not necessarily refer to a same embodiment, or an independent or alternative embodiment mutually exclusive with another embodiment. Persons skilled in the art may explicitly and implicitly understand that the embodiments described in this specification may be combined with other embodiments. Based on the embodiments of this application, all other embodiments obtained by a person of ordinary skill in the art without creative efforts fall within the protection scope of this application.

In the specification, claims, and accompanying drawings of this application, the terms "first", "second", "third", and the like are intended to distinguish between different objects, but are not intended to describe a particular order. In addition, the terms "include" and "have" and any variations thereof are intended to cover non-exclusive inclusion. For example, a series of steps or units are included, or optionally, steps or units not listed are further included, or optionally other steps or units inherent to these processes, methods, products, or devices are further included.

The accompanying drawings show only some content related to this application but not all content. Before example embodiments are further described in detail, it should be mentioned that some example embodiments are described as processing or methods depicted as flowcharts. Although the flowcharts describe operations (or steps) as sequential processing, many of these operations may be implemented in parallel, concurrently, or simultaneously. In addition, a sequence of the operations may be rescheduled. The processing may be terminated when operations of the processing are completed, but there may be additional steps not included in the accompanying drawings. The processing may correspond to a method, a function, a procedure, a subroutine, a subprogram, and the like.

Terms "part", "module", "system", "unit", and the like used in this specification are used to represent computer-related entities, hardware, firmware, a combination of hardware and software, software, or software in execution. For example, the unit may be but is not limited to a process running on a processor, a processor, an object, an executable file, an execution thread, a program, and/or distributed between two or more computers. In addition, the unit may be executed by various computer-readable media on which various data structures are stored. For example, a unit may communicate through local and/or remote processes based on a signal with one or more data packets (for example, second unit data exchanged by another unit from a local system, a distributed system, and/or a network, and for example, the internet that interacts with another system by using a signal).

In recent years, electronic devices such as a tablet computer and a foldable mobile phone are favored because of a large screen size and easy screen splitting, which allows a user to operate two applications on one screen, improving user experience. For example, for the tablet computer, a screen splitting function of the tablet computer may be used to perform left-right screen splitting on a video application and office software, so that a video playback interface and a text editing interface are simultaneously displayed on a screen of the tablet computer. In this way, the user can edit a document while watching a video by using the tablet computer, so that the user can enjoy both entertainment and leisure.

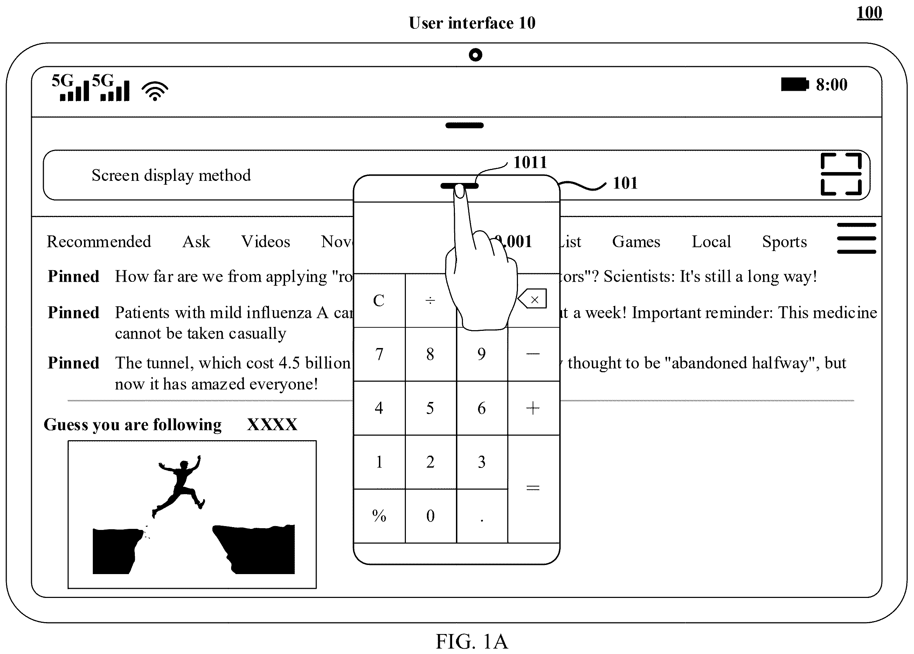

To better understand the foregoing application scenario, the following provides an example description of the application scenario in this embodiment of this application with reference to FIG. 1A-FIG. 1J. In this embodiment of this application, an electronic device 100 is used as an example for description. The electronic device 100 may be a smartphone, a foldable mobile phone, a tablet computer, or another type of terminal device. This is not limited in this embodiment of this application.

FIG. 1A shows a user interface 10 of the electronic device 100, and the user interface 10 is an example interface of a browser application. A floating window 101 is displayed in the user interface 10, and the floating window 101 is a corresponding floating window of a calculator application. In the user interface 10, the floating window 101 may accept an operation of a user to move in the user interface 10.

For example, after the electronic device 100 detects a touch and hold operation (a first operation) performed by the user on a drag bar 1011 on the floating window 101, the electronic device 100 sets the floating window 101 to a "draggable" mode (a first mode) in response to the operation. To be specific, the user may drag and move the floating window 101 in the user interface 10 by using the drag bar 1011.

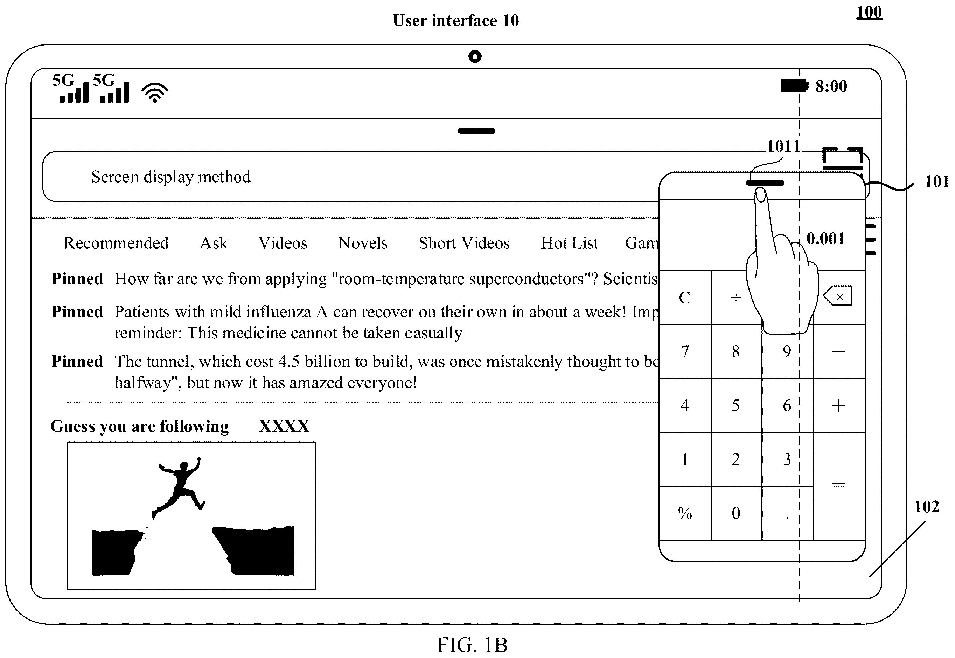

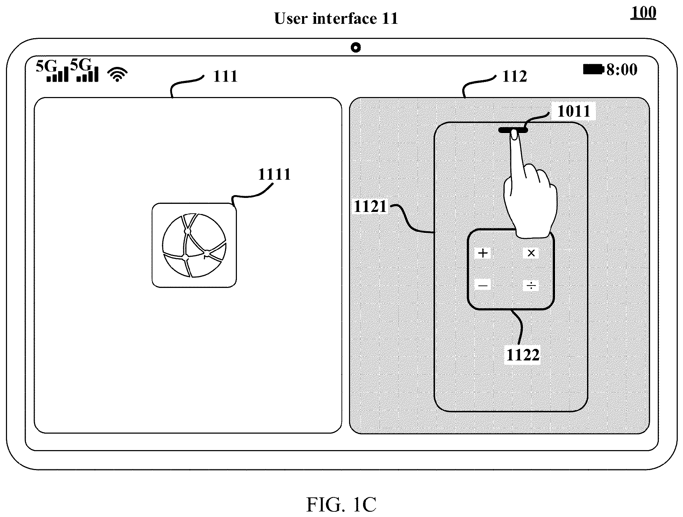

As shown in FIG. 1B, when the floating window 101 is in the "draggable" mode, in response to a second operation performed by the user on the drag bar 1011 (for example, dragging the floating window 101 to the right of a screen), the electronic device 100 moves the floating window 101 and the drag bar 1011 thereof to the right of the screen in a moving direction of a user gesture. In this case, the user continues to drag the floating window 101 to the right. At a moment t1, after the electronic device 100 detects that the drag bar 1011 enters a region 102, the electronic device 100 starts to perform left-right screen splitting, and displays a user interface 11 shown in FIG. 1C.

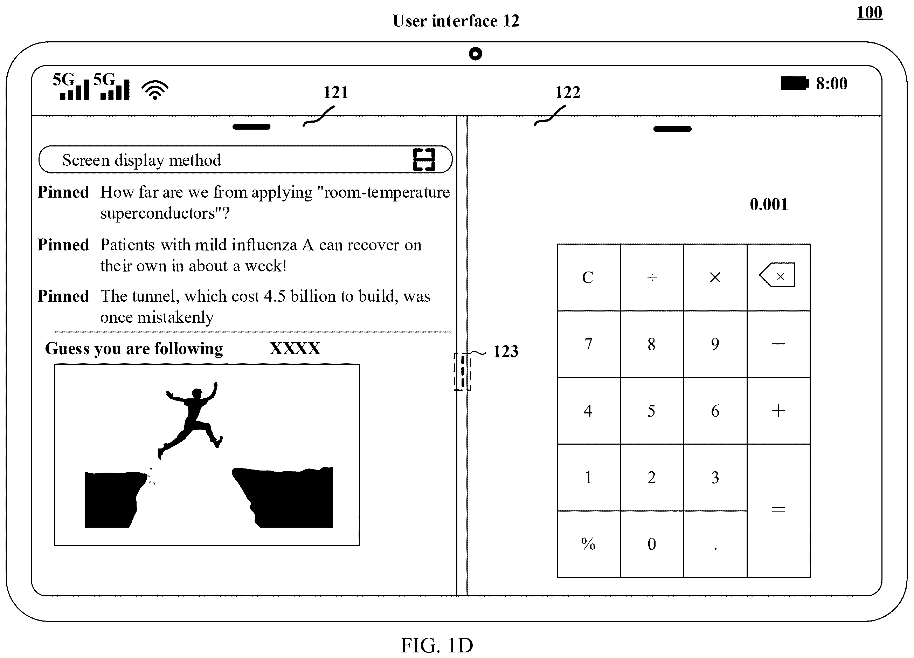

As shown in FIG. 1C, the user interface 11 is an example animation effect interface of the electronic device 100 in a left-right screen splitting process. An animation effect box 111 is an animation effect box of the browser application, and a split-screen animation effect of a browser may be displayed in the animation effect box, for example, an icon 1111 of the browser application. An animation effect box 112 is an animation effect box of the calculator application, and a split-screen animation effect of a calculator may be displayed in the animation effect box, for example, a gray background image, a floating window 1121 of the calculator application, an application icon 1122 of the calculator application, and the drag bar 1011 of the floating window. In this case, a finger of the user still touches and holds the drag bar 1011. After the electronic device 100 detects a third operation performed by the user on the drag bar 1011 (for example, raising a hand to release the drag bar 1011), in response to the third operation, the electronic device 100 displays a user interface 12 shown in FIG. 1D.

As shown in FIG. 1D, the user interface 12 is an example user interface after the electronic device 100 performs left-right screen splitting on the browser application and the calculator application. The user interface 12 includes an interface 121 of the browser application (a second split-screen interface) and an interface 122 of the calculator application (a first split-screen interface). The user may perform different operations in different split-screen interfaces. For example, the user may browse news and search for information on the Internet by using the second split-screen interface, and perform data calculation by using the first split-screen interface.

In the foregoing embodiments of FIG. 1A-FIG. 1D, example descriptions of an application scenario in which the electronic device 100 performs left-right screen splitting are provided. In some embodiments, the electronic device may alternatively perform top-bottom screen splitting, to obtain different split-screen display effects.

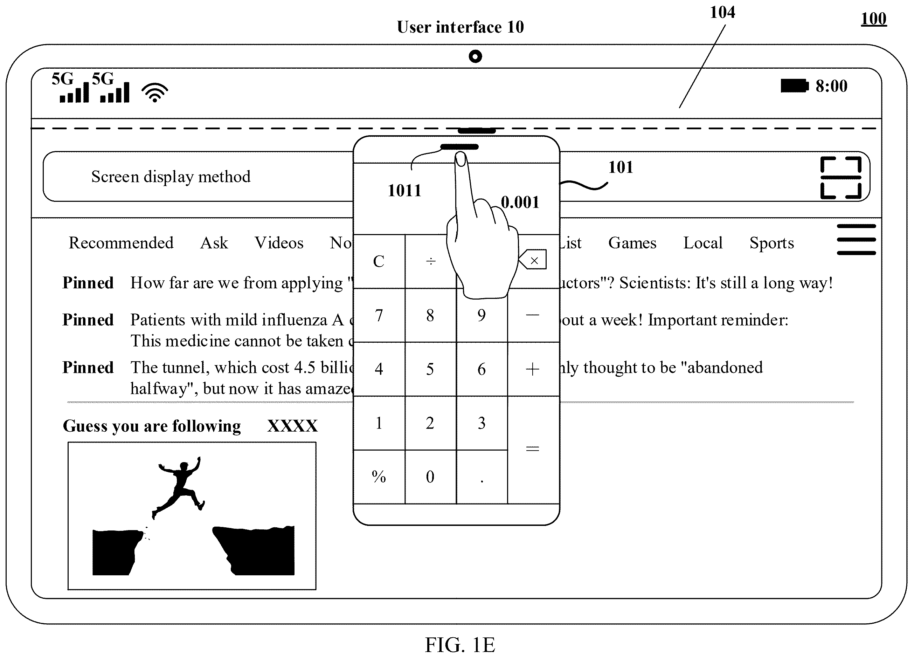

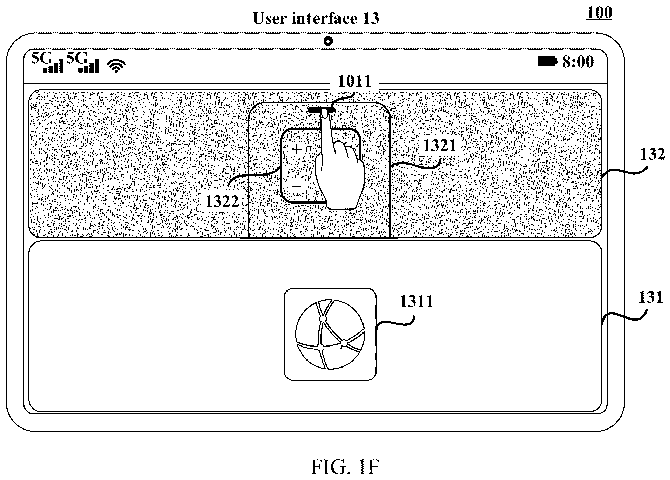

For example, in the user interface 10 of FIG. 1E, when the electronic device 100 detects a first operation performed by the user on the drag bar 1011 on the floating window 101 of the calculator application (for example, touching and holding the drag bar 1011), the floating window 101 enters the "draggable" mode (the first mode) in response to the first operation. In this case, when the electronic device 100 detects a second operation performed by the user on the drag bar 1011 (for example, dragging the drag bar 1011 upward), in response to the second operation, the floating window 101 moves upward in a direction in which a user gesture moves. When the electronic device 100 detects that the drag bar 1011 is in a region 104, the electronic device 100 displays a user interface 13 shown in FIG. 1F.

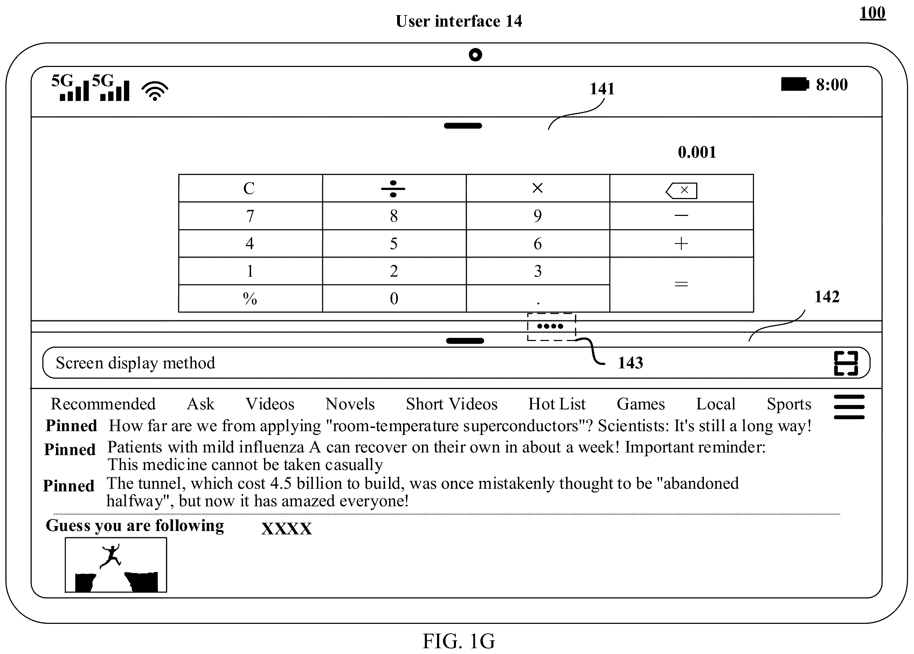

As shown in FIG. 1F, the user interface 13 is an example animation effect interface of the electronic device 100 in a top-bottom screen splitting process. An animation effect box 131 is an animation effect box of the browser application, and animation effect content of the browser may be displayed in the animation effect box, for example, an application icon 1311 of the browser. An animation effect box 132 is an animation effect box of the calculator application, and animation effect content of the calculator application is displayed in the animation effect box, for example, a floating window 1321, a gray background image, an icon 1322 of the calculator application, and the drag bar 1011. In this case, a finger of the user still touches and holds the drag bar 1011. After the electronic device 100 detects a third operation performed by the user on the drag bar 1011 (for example, raising a hand to release the drag bar 1011), in response to the third operation, the electronic device 100 displays a user interface 14 shown in FIG. 1G.

As shown in FIG. 1G, the user interface 14 is an example user interface after the electronic device 100 performs top-bottom screen splitting on the browser application and the calculator application. The user interface 14 includes an interface 142 of the browser application (a second split-screen interface) and an interface 141 of the calculator application (a first split-screen interface). The user may perform different operations in different split-screen interfaces. For example, the user may browse news and surf the Internet by using the second split-screen interface, and perform data calculation by using the first split-screen interface.

In some embodiments, switching may be performed between a top-bottom split-screen interface and a left-right split-screen interface. For example, the user interface 12 and the user interface 14 respectively include a split-screen switching control 123 and a split-screen switching control 143. In the user interface 12, after the electronic device 100 detects an input operation (for example, tapping) for the split-screen switching control 123, the electronic device 100 may switch the user interface 12 to the user interface 14 in response to the input operation, that is, switch the left-right split-screen interface to the top-bottom split-screen interface. In the user interface 14, after the electronic device 100 detects an input operation (for example, tapping) for the split-screen switching control 143, the electronic device 100 may switch the user interface 14 to the user interface 12 in response to the input operation, that is, switch the top-bottom split-screen interface to the left-right split-screen interface.

In the foregoing embodiments of FIG. 1A-FIG. 1G, an application scenario in which the electronic device 100 performs left-right screen splitting or top-bottom screen splitting in a landscape state is mainly described. In some application scenarios, the electronic device 100 may switch between a landscape state and a portrait state based on a status in which the user holds the electronic device 100. In the portrait state, the electronic device 100 may also perform screen splitting on the floating window. The following uses only an example in which the electronic device 100 performs top-bottom screen splitting in the portrait state for description.

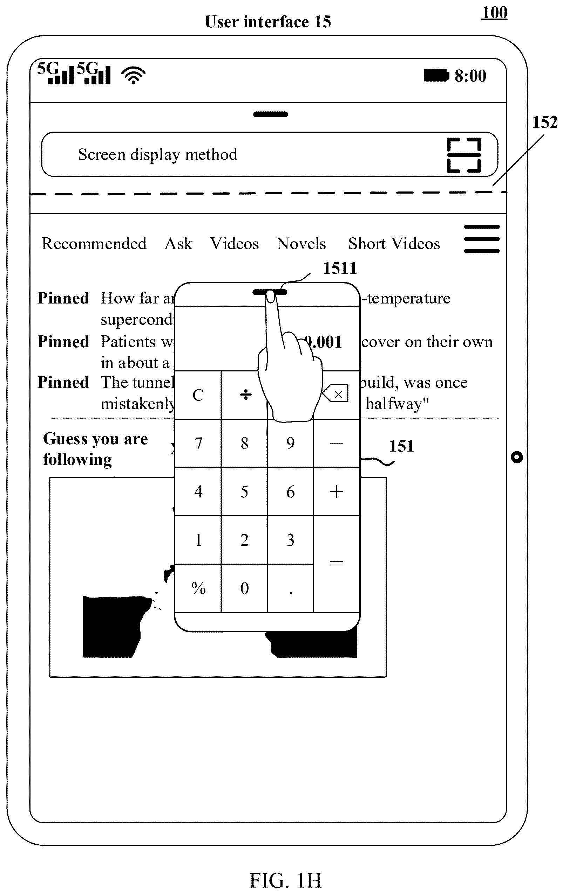

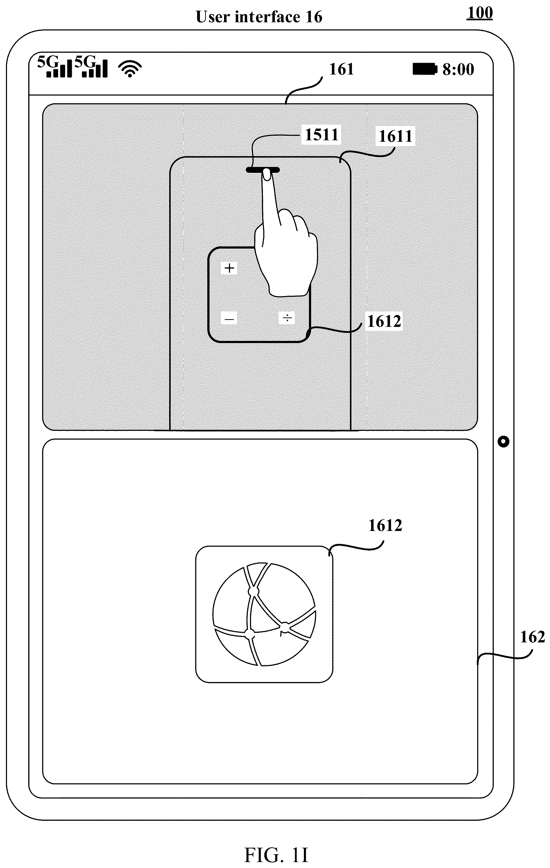

As shown in FIG. 1H, a user interface 15 is an example user interface of the electronic device 100 in the portrait state. The user interface is an interface of the browser application, and a floating window 151 of the calculator application and a drag bar 1511 corresponding to the floating window are displayed in the user interface. When the electronic device 100 detects a first operation performed by the user on the drag bar 1511 (for example, touching and holding the drag bar 1511), the floating window 151 enters a "draggable" mode in response to the first operation. In this case, if the electronic device 100 detects a second operation of the user (for example, dragging the drag bar 1511 upward), in response to the second operation, the electronic device 100 moves the floating window 151 upward following a moving direction of a finger. When the electronic device 100 detects that the drag bar enters a region 152, the electronic device 100 displays a user interface 16 shown in FIG. 1I.

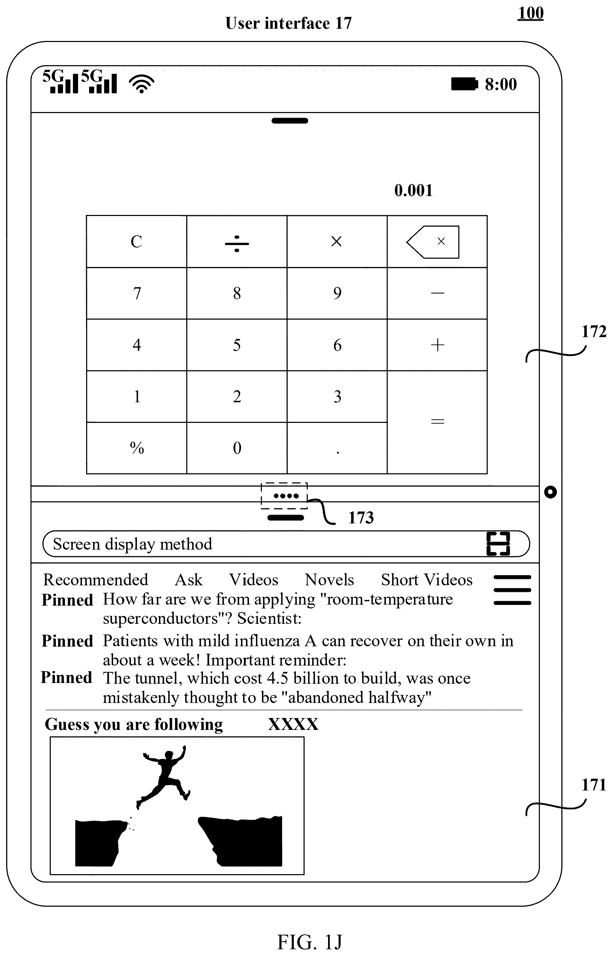

In FIG. 1I, the user interface 16 is an example animation effect interface in a process in which the electronic device 100 performs top-bottom screen splitting in a vertical screen interface. The animation effect interface includes a first animation effect box 161 and a second animation effect box 162. Animation effect content of the calculator application is displayed in the first animation effect box 161, for example, a floating window 1611, a gray background image, and an application icon 1612 of the calculator. Animation effect content of the browser application is displayed in the second animation effect box 162, for example, an application icon 1612. In this case, the electronic device 100 detects a third operation for the drag bar 1511 (for example, raising a hand to release the drag bar 1511), and in response to the third operation, the electronic device 100 displays a user interface 17 shown in FIG. 1J.

In FIG. 1J, the user interface 17 is an example interface of top-bottom split-screen of the electronic device 100 in the portrait state. The user interface 17 includes a first split-screen interface 172 (an interface of the calculator application) and a second split-screen interface 171 (an interface of the browser application). In some application scenarios, the user interface 17 may further include a split-screen switching control 173. When the electronic device 100 detects an input operation (for example, tapping) performed by the user on the split-screen switching control 173, the electronic device 100 switches top-bottom split-screen to left-right split-screen in the portrait state in response to the input operation.

In some embodiments, a location of an application split-screen interface may be related to a direction in which the floating window is dragged. For example, in the foregoing embodiments of FIG. 1A-FIG. 1D, because the electronic device 100 moves the floating window 101 to the right in response to the second operation performed by the user on the drag bar, in the user interface of FIG. 1D, the electronic device displays a split-screen interface of the calculator application on the right and a split-screen interface of the browser application on the left. For another example, in the foregoing embodiments of FIG. 1E-FIG. 1J, because the electronic device 100 moves the floating window 151 upward in response to the second operation performed by the user on the drag bar, in the user interface in FIG. 1J, the electronic device displays a split-screen interface of the calculator application on a top side, and displays a split-screen interface of the browser application on a bottom side.

It should be understood that the foregoing embodiments of FIG. 1A-FIG. 1J are merely example descriptions of an application scenario in which the electronic device 100 performs screen splitting in this embodiment of this application.

The following provides example descriptions for two principles of performing split-screen display by the electronic device 100. The electronic device usually determines, by detecting whether a drag bar of a floating window enters a hot zone, whether to trigger a screen splitting operation. When the electronic device determines that the drag bar of the floating window is in a hot zone range, the electronic device triggers a screen splitting operation. When the electronic device determines that the drag bar of the floating window is not in the hot zone range, the electronic device does not trigger a screen splitting operation.

The electronic device performs a screen splitting operation mainly in the following three processes: triggering a screen splitting operation, displaying a split-screen animation effect, and displaying a split-screen interface. Triggering a screen splitting operation is mainly implemented by determining whether the drag bar of the floating window is in the hot zone range. The hot zone described herein can be understood as a region that is not user-oriented (invisible to the user) and that is in a specific range delimited on a screen display region. Hot zones can be classified into a regular hot zone and an irregular hot zone. In this embodiment of this application, the regular hot zone can be understood as a rectangular-shaped hot zone, and the irregular hot zone can be understood as a hot zone with a non-rectangular shape (for example, a triangle or a circle). For the regular hot zone and the irregular hot zone, principles of triggering a screen splitting operation and displaying a split-screen animation effect may also be different. For ease of understanding, principles of performing a screen splitting operation by the electronic device 100 based on a regular hot zone and performing a screen splitting operation based on an irregular hot zone are separately described in the following in this embodiment of this application.

First, the principle of performing a screen splitting operation by the electronic device 100 based on a regular hot zone is described by using an example.

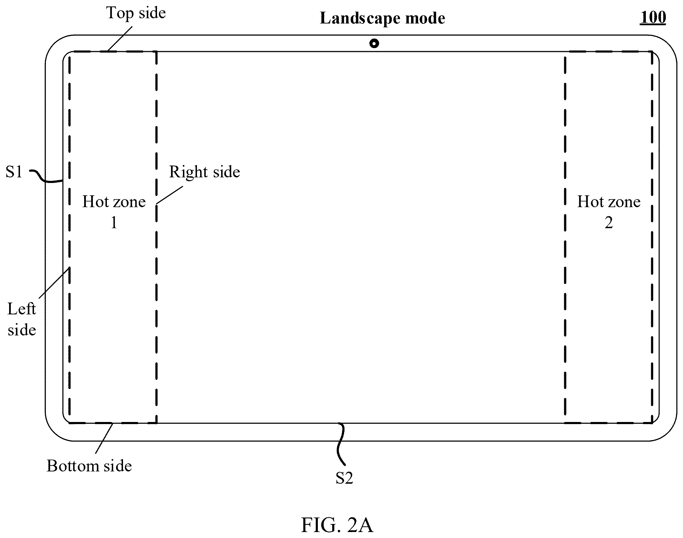

In FIG. 2A, a display region of the electronic device 100 includes two hot zones that both have a rectangular shape, which are respectively a hot zone 1 and a hot zone 2. For the hot zone 1 and the hot zone 2, the electronic device 100 first needs to record locations of the two regions in the screen region. A method used is to record a distance between each hot zone and an edge of a display region to record a range of the hot zone in the display region, to define the hot zone.

Because a shape of each hot zone is a rectangle, it may be found that four sides of each hot zone are actually parallel to top and bottom sides/left and right sides of the screen edge. It is assumed that a hot zone is defined by using a left edge (S1) and a lower edge (S2) of the display region (a display screen) as a reference, and distances between left, right, top, and bottom sides of each hot zone and S1/S2 are defined by using four-dimensional coordinates. In this case, a range of a hot zone may be represented by (X, Y, Z, K), where X represents a distance between a left side of the hot zone and a left edge of the display region (S1 in FIG. 2A), Y represents a distance between a right side of the hot zone and the left edge of the display region, Z represents a distance between a top side of the hot zone and a lower edge of the display region, and K represents a distance between a bottom side of the hot zone and the lower edge of the display region. By defining four-dimensional coordinates of each hot zone, a range of any regular hot zone in the display region of the electronic device can be defined.

It should be noted that in this embodiment of this application, only the left edge and the lower edge of the display region are used as a reference to define a hot zone. In some embodiments, any other two non-parallel edges of the display region may alternatively be selected as reference edges to define a hot zone.

For example, it is assumed that a length of the left edge of the display region is h1, and a length of the lower edge of the display region is h2. It may be learned from FIG. 2A that a range of the hot zone 1 in the display region is (0.024*h2, 0.15*h2, h1, 0), and a range of the hot zone 2 in the display region is (0.85*h2, 0.96*h2, h1, 0). The regular hot zone is defined in the foregoing manner, and even if the electronic device switches between the landscape state and the portrait state, the hot zone may be correspondingly switched. In this case, the hot zone is not redefined due to switching between the landscape state and the portrait state.

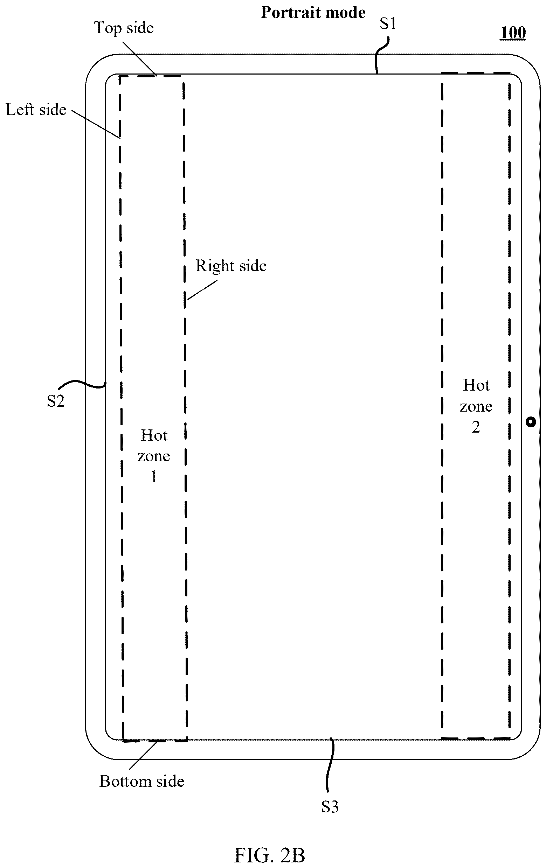

For example, FIG. 2B shows an interface diagram of the electronic device 100 in the portrait mode. Because the electronic device 100 selects the left edge and the lower edge of the display region as a reference to define a hot zone, in FIG. 2B, the left edge of the display region is corresponding to S2, and the lower edge of the display region is corresponding to S3. If the range of the hot zone 1 in the display region is (0.024*h2, 0.15*h2, h1, 0), and the range of the hot zone 2 in the display region is (0.85*h2, 0.96*h2, h1, 0), ranges of the hot zone 1 and the hot zone 2 in the display region may be as shown in FIG. 2B.

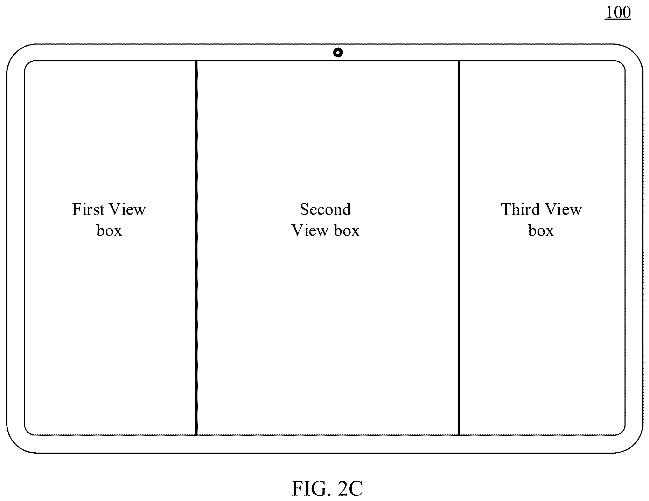

FIG. 2C is an example layout diagram of View boxes of an electronic device 100 in a landscape mode. For a screen splitting operation performed in a manner of using a regular hot zone, the electronic device usually divides a plurality of View boxes with regular shapes (which are all rectangles) in the screen region. These View boxes may be used to display animation effect content of applications in a screen splitting process. For ease of description, only three View boxes are shown in FIG. 2C, and the three View boxes are on one layer. Similar to the foregoing definition of the range of the hot zone in the display region, a range of each View box in the display region of the electronic device is also determined by using four-dimensional coordinates. For related descriptions of a definition of the range of the View box, refer to the foregoing descriptions. Details are not described herein again.

When detecting that the drag bar of the floating window is in the hot zone range, the electronic device starts to perform a screen splitting operation. Then, the four-dimensional coordinates of the View box in the display region may be correspondingly changed based on a type of the screen splitting operation (for example, a top split-screen of an application corresponding to a floating window, a bottom split-screen of the application corresponding to the floating window, a left split-screen of the application corresponding to the floating window, and a right split-screen of the application corresponding to the floating window). A distance between a selected edge of the display region and each of a top side, a bottom side, a left side, and a right side of the View box is adjusted based on the four-dimensional coordinates, so that the range of the View box in the display region is changed, and a View box for displaying animation effect content of the application in the screen splitting process is further obtained.

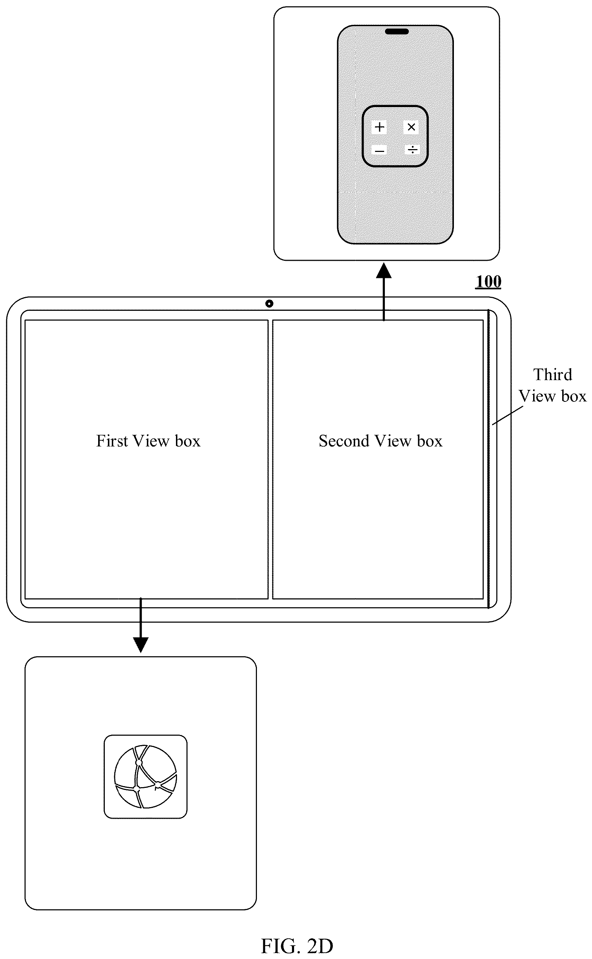

FIG. 2D is a layout diagram of a View box of a display region of an electronic device in a screen splitting operation process of the electronic device. It may be seen that in comparison with FIG. 2C, ranges of the first View box and the second View box are expanded, and a range of a third View box is obviously compressed. With reference to the foregoing embodiments of FIG. 1A-FIG. 1D, animation effect content in the animation effect box 111 in FIG. 1C may be displayed in the first View box, and animation effect content in the animation effect box 112 in FIG. 1C is displayed in the second View box.

The principle of performing a screen splitting operation by the electronic device 100 in an irregular hot zone-based manner is described by using an example in the following.

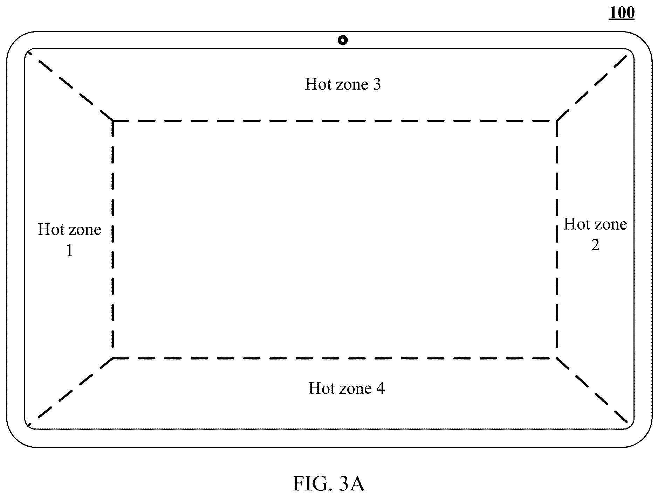

FIG. 3A is an example diagram of irregular hot zone division of an electronic device 100. FIG. 3A includes four hot zones, which are respectively a hot zone 1, a hot zone 2, a hot zone 3, and a hot zone 4. Because all the four hot zones are trapezoid, and each includes a side that is not parallel to an edge of the display region, all the four hot zones are irregular hot zones. In this case, the electronic device cannot use the foregoing method of defining four-dimensional coordinates to represent a range of the irregular hot zone in the display region (because a waist of the trapezoid is not parallel to the upper edge or the lower edge of the display region, it cannot be represented by a distance from the lower edge or the left edge). Therefore, for the irregular hot zone, it is necessary to obtain a corresponding logical function H based on a layout of the irregular hot zone in the display region. Then, it is determined, based on an output of the logical function H, whether to perform a screen splitting operation, and which type of screen splitting operation (for example, a top split-screen of an application corresponding to a floating window, a bottom split-screen of the application corresponding to the floating window, a left split-screen of the application corresponding to the floating window, and a right split-screen of the application corresponding to the floating window) should be performed when the screen splitting operation is to be performed.

For example, in a process in which the user drags the drag bar of the floating window, the electronic device may obtain location coordinates (x, y) of the drag bar in the display region in real time, and use (x, y) as input of H to obtain a first identifier W; and determine, according to W, whether to perform a screen splitting operation and which type of screen splitting operation should be performed when the screen splitting operation is performed.

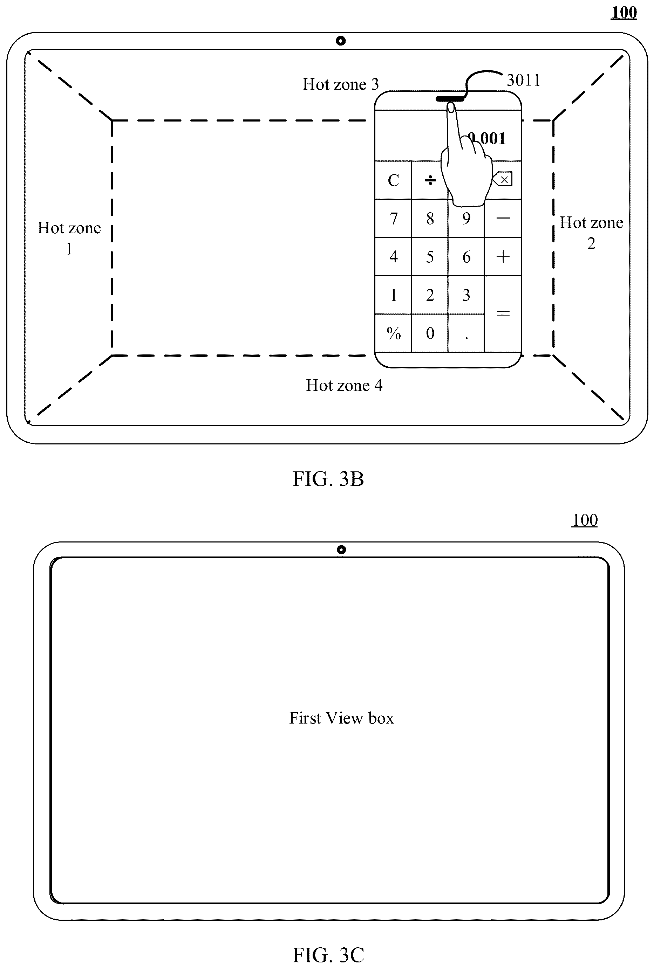

For example, in FIG. 3B, location coordinates of a drag bar 3011 of the floating window are (x1, y1), the first identifier W is calculated according to W=H (x1, y1), and it is determined according to W that a top screen splitting operation of the application corresponding to the floating window should be performed.

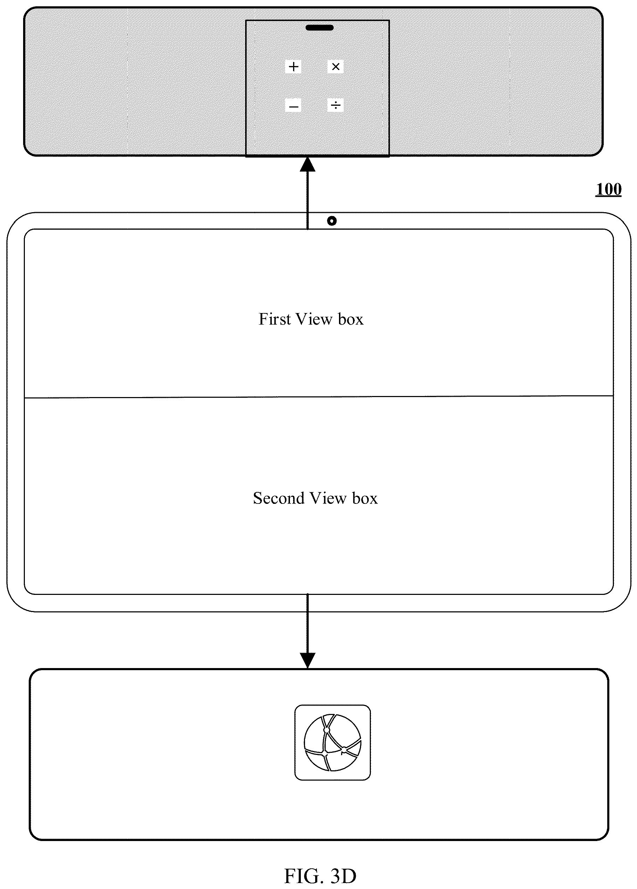

For an irregular hot zone, the entire display region is usually used as one View box (for example, a first View box shown in FIG. 3C). When a split-screen animation effect is to be displayed (for example, the user interface 13 in FIG. 1F), it is necessary to add one more View box on a basis of an existing View box, which also adds one layer. For example, FIG. 3D is a layout diagram of a View box in a process of performing top screen splitting on an application corresponding to a floating window. A second View box is a newly added View box on a basis of the first View box. With reference to the foregoing embodiment of FIG. 1F, it is understood that the first View box displays the animation effect content of the calculator application, and the second View box displays the animation effect content of the browser application.

For the foregoing screen splitting operation performed in a regular hot zone-based manner, on the one hand, the range of the hot zone in the display region may be defined by using the four-dimensional coordinates, and the range of the hot zone in the landscape or portrait mode may also be correspondingly switched. Therefore, code logic for performing the screen splitting operation in this manner is simple, code readability is strong, and it is easy for a technician to perform technical maintenance in a later period. On the other hand, when the technician needs to modify the range or the location of the hot zone in a later period, the technician needs to change only the four-dimensional coordinates of the hot zone. This greatly improves working efficiency of the technician.

However, only a regular region can be defined according to this method, and a code quantity is relatively redundant to some extent. In addition, only two hot zones (top and bottom hot zones or left and right hot zones) are usually defined in this manner. In this case, only top-bottom split-screen or left-right split-screen can be implemented in a hot zone manner. In an example in which the left and right hot zones are defined, the electronic device may perform only left-right screen splitting in the hot zone manner. To perform top-bottom screen splitting, the electronic device may only perform left-right screen splitting first and then switch to top-bottom split-screen in a switching manner (for example, by performing a single-tap operation on the split-screen switching control 123 in FIG. 1D). In this case, switching from left-right split-screen to top-bottom split-screen is a relatively complicated process for the user, and a process of switching from left-right split-screen to top-bottom split-screen is without a split-screen animation effect, which brings a person an abrupt feeling from the user interface.

For the foregoing screen splitting operation performed in the irregular hot zone-based manner, on the one hand, the first identifier calculated by using the logical function based on the location of the drag bar of the floating window is used to determine whether to perform a screen splitting operation and to perform which type of screen splitting operation. Therefore, a hot zone in any shape can be defined. On the other hand, when the split-screen animation effect is to be displayed, a View box needs to be added to an uppermost layer, and in this case, a layer is added, which makes underlying code more complex.

Therefore, to resolve problems existing in the screen splitting operations performed based on the foregoing regular hot zone method and the irregular hot zone method, an embodiment of this application provides a screen display method. The method is as follows: Before performing a screen splitting operation, an electronic device first determines whether both an application corresponding to a floating window and an application corresponding to a current user interface are applications supporting top-bottom split-screen and left-right split-screen. If yes, the electronic device determines, by using the irregular hot zone method (by using a logical function method), whether to perform a screen splitting operation, and when the screen splitting operation needs to be performed, determines to perform which type of screen splitting operation (for example, a left-right screen splitting operation with an application interface corresponding to a floating window on the left, or a left-right screen splitting operation with the application interface corresponding to the floating window on the right, or a top-bottom screen splitting operation with the application interface corresponding to the floating window on a top side, or a top-bottom screen splitting operation with the application interface corresponding to the floating window on a bottom side, or no screen splitting operation is to be performed). If no, the electronic device determines, by using the regular hot zone method (by determining whether a drag bar of the floating window is in a defined regular hot zone), whether to perform a screen splitting operation, and when the screen splitting operation needs to be performed, determines to perform which type of screen splitting operation (for example, a left-right screen splitting operation with the application interface corresponding to the floating window on the left, or a left-right screen splitting operation with the application interface corresponding to the floating window on the right).

In addition, the electronic device sets a plurality of View boxes at a same layer in a screen region (in this embodiment of this application, three View boxes are set as an example for description). In a process of performing a screen splitting operation, sizes and locations of the three View boxes are changed to obtain a View box for displaying animation effect content of an application. Then, animation effect content of a corresponding application is displayed in the View box. In this manner, it avoids a problem that a layer becomes complicated and thus code further becomes complicated because an extra View box must be added for generating an animation effect of a split-screen application in a process in which the electronic device performs a screen splitting operation.

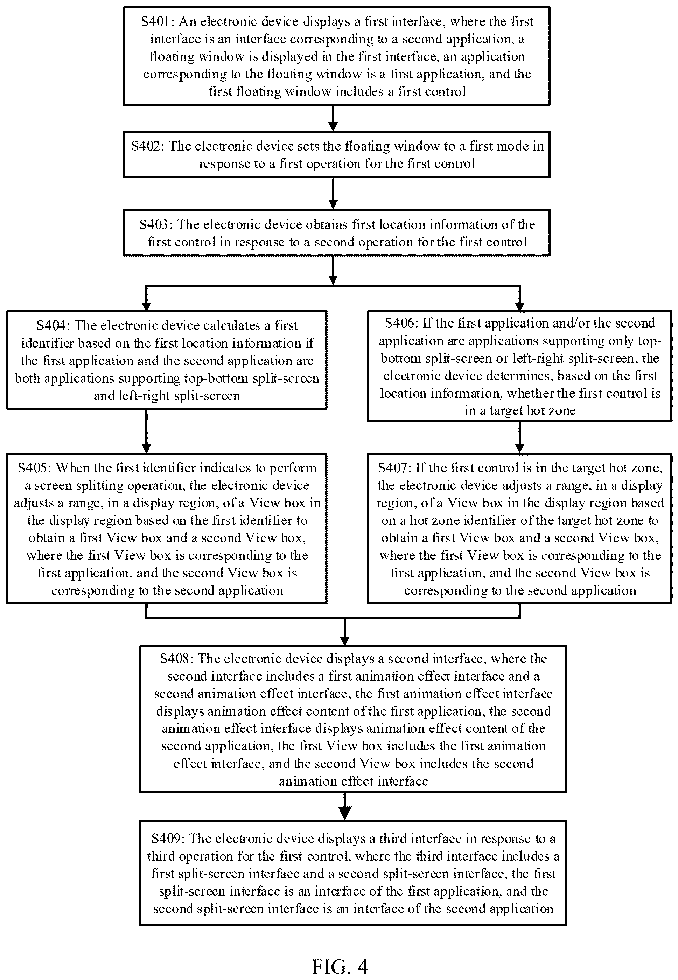

With reference to the accompanying drawings, the following describes a procedure of a screen display method provided in an embodiment of this application. FIG. 4 is a flowchart of a screen display method according to an embodiment of this application. A specific procedure is as follows:

S401: An electronic device displays a first interface, where the first interface is an interface corresponding to a second application, a floating window is displayed in the first interface, an application corresponding to the floating window is a first application, and the first floating window includes a first control.

For example, the first interface may be the user interface 10 in the foregoing embodiment of FIG. 1A, the floating window may be the floating window 101 in the foregoing embodiment of FIG. 1A, and the first control may be the drag bar 1011 in the foregoing embodiment of FIG. 1A. The first application may be the calculator application (the application corresponding to the floating window) in the foregoing embodiment of FIG. 1A, and the second application may be the browser application in the foregoing embodiment of FIG. 1A.

S402: The electronic device sets the floating window to a first mode in response to a first operation for the first control.

For example, the first operation may be a touch and hold operation for the drag bar 1011 in the foregoing embodiment of FIG. 1A. The first mode is a working mode in which the floating window moves in a dragging direction of a user.

Optionally, after detecting the first operation performed by the user on the first control, the electronic device may obtain application identifiers of the first application and the second application, and determine, based on the application identifiers of the first application and the second application, whether the application identifier of the first application and the application identifier of the second application exist in a first whitelist. The first whitelist includes a plurality of application identifiers of applications, and the applications corresponding to the plurality of application identifiers are all applications supporting top-bottom split-screen and left-right split-screen.

If the application identifier of the first application and the application identifier of the second application exist in the first whitelist, it indicates that both the first application and the second application support top-bottom split-screen and left-right split-screen. In this case, the electronic device performs a screen splitting operation on the first application and the second application by using an irregular hot zone method.

If the application identifier of the first application or the application identifier of the second application does not exist in the first whitelist, or both the application identifier of the first application and the application identifier of the second application do not exist in the first whitelist, it indicates that the first application and/or the second application only supports one split-screen manner of top-bottom split-screen and left-right split-screen. In this case, the electronic device performs a screen splitting operation on the first application and the second application by using a regular hot zone method.

S403: The electronic device obtains first location information of the first control in response to a second operation for the first control.

For example, the second operation may be an input operation of dragging the drag bar 1011 to the right by the user in the foregoing embodiment of FIG. 1B.

After detecting the second operation for the first control, the electronic device may obtain the first location information of the first control in real time. The first location information may be two-dimensional coordinate information of the first control in a display region of the electronic device.

In some embodiments, coordinate information of a center point of the first control in the display region may be determined as the first location information, or coordinate information of any point of the first control in the display region may be determined as the first location information. This is not limited in this embodiment of this application.

S404: The electronic device calculates a first identifier based on the first location information if the first application and the second application are both applications supporting top-bottom split-screen and left-right split-screen.

Specifically, in the foregoing S402, if both the identification information of the first application and the identification information of the second application are in the first whitelist, the first application and the second application are both applications supporting top-bottom split-screen and left-right split-screen. If the first application and the second application are both applications supporting top-bottom split-screen and left-right split-screen, the electronic device determines, by using the irregular hot zone method, whether to perform a screen splitting operation on the first application and the second application. To be specific, the electronic device determines, by using the first identifier output by using a logical function, whether to perform a screen splitting operation, and on the premise that the screen splitting operation is to be performed, determines to perform which type of screen splitting operation (for example, a top screen splitting operation for the first application, a bottom screen splitting operation for the first application, a left screen splitting operation for the first application, or a right screen splitting operation for the first application).

The electronic device may first obtain a logical function H corresponding to a set irregular hot zone; then use first coordinate information (x, y) as an input of H to obtain the first identifier W, that is, W=H (x, y), so that W can be calculated in real time based on the first location information obtained by the electronic device in real time; and determine, based on the first identifier, whether the electronic device performs a screen splitting operation, and if the screen splitting operation is to be performed, determine which type of screen splitting operation should be performed.

S405: When the first identifier indicates to perform a screen splitting operation, the electronic device adjusts a range, in the display region, of a View box in the display region based on the first identifier to obtain a first View box and a second View box, where the first View box is corresponding to the first application, and the second View box is corresponding to the second application.

Specifically, the display region can be understood as a display screen of the electronic device. The first identifier calculated by the electronic device may be classified into the following five cases: a top split-screen for the first application (for example, the first identifier is Topsplit), a bottom split-screen for the first application (for example, the first identifier is Bottomsplit), a left split-screen for the first application (for example, the first identifier is Leftsplit), a right split-screen for the first application (for example, the first identifier is Rightsplit), and no screen splitting operation is performed (for example, the first identifier is Freeform).

The top split-screen for the first application and the bottom split-screen for the first application indicate that a top-bottom screen splitting operation needs to be performed on the first application. The top split-screen for the first application indicates that an interface of the first application is above an interface of the second application in a split-screen interface. The bottom split-screen of the first application indicates that the interface of the first application is below the interface of the second application in the split-screen interface. The left split-screen for the first application and the right split-screen for the first application indicate that a left-right screen splitting operation needs to be performed on the first application. The left split-screen for the first application indicates that an interface of the first application is on the left of an interface of the second application in a split-screen interface. The right split-screen for the first application indicates that the interface of the first application is on the right of the interface of the second application in the split-screen interface.

After the electronic device calculates the first identifier, if the first identifier represents that the electronic device needs to perform a screen splitting operation (for example, the first identifier is Topsplit, Bottomsplit, Leftsplit, or Rightsplit), the electronic device may determine a corresponding animation effect scheme based on the first identifier, to correspondingly adjust the range of the View box in the display region. In the display region of the electronic device, N View boxes are preset, and the N View boxes are on a same layer. For ease of description, an example in which N is 3 is used for description in this embodiment of this application.

For example, the display region of the electronic device 100 in FIG. 2C includes three View boxes, which are respectively a first View box, a second View box, and a third View box. In the three View boxes, each View box has top, bottom, left, and right sides. A location and a size of each View box may be determined by defining a distance between a screen edge and each of the top, bottom, left, and right sides. A location and a size of a single View box in the display region of the electronic device may be represented by using a manner of four-dimensional coordinates. For example, the four-dimensional coordinates may be (X, Y, Z, K), where X may represent a distance between a left side length of the single View box and a left edge of the screen, Y may represent a distance between a right side length of the single View box and the left edge of the screen, Z may represent a distance between a top side length of the single View box and a lower edge of the screen, and K may represent a distance between a bottom side length of the single View box and a right edge of the screen.

Four-dimensional coordinates of different View boxes corresponding to different first identifiers, namely, different animation effect schemes corresponding to the different first identifiers, may be prestored in the electronic device. For example, when the first identifier is Topsplit, four-dimensional coordinates of the first View box may be (X₁₁, Y₁₁, Z₁₁, K₁₁), four-dimensional coordinates of the second View box may be (X₂₁, Y₂₁, Z₂₁, K₂₁), and four-dimensional coordinates of the third View box may be (X₃₁, Y₃₁, Z₃₁, K₃₁).

When the first identifier is Bottomsplit, four-dimensional coordinates of the first View box may be (X₁₂, Y₁₂, Z₁₂, K₁₂), four-dimensional coordinates of the second View box may be (X₂₂, Y₂₂, Z₂₂, K₂₂), and four-dimensional coordinates of the third View box may be (X₃₂, Y₃₂, Z₃₂, K₃₂).

When the first identifier is Leftsplit, four-dimensional coordinates of the first View box may be (X₁₃, Y₁₃, Z₁₃, K₁₃), four-dimensional coordinates of the second View box may be (X₂₃, Y₂₃, Z₂₃, K₂₃), and four-dimensional coordinates of the third View box may be (X₃₃, Y₃₃, Z₃₃, K₃₃).

When the first identifier is Rightsplit, four-dimensional coordinates of the first View box may be (X₁₄, Y₁₄, Z₁₄, K₁₄), four-dimensional coordinates of the second View box may be (X₂₄, Y₂₄, Z₂₄, K₂₄), and four-dimensional coordinates of the third View box may be (X₃₄, Y₃₄, Z₃₄, K₃₄). When the first identifier is Freeform, the four-dimensional coordinates of the View box may not be stored.

After calculating the first identifier, the electronic device may select four-dimensional coordinates of each View box corresponding to the first identifier, and adjust locations of top, bottom, left, and right sides of each View box according to the obtained four-dimensional coordinates of each View box, to obtain the first View box used to display animation effect content of the first application and the second View box used to display animation effect content of the second application.

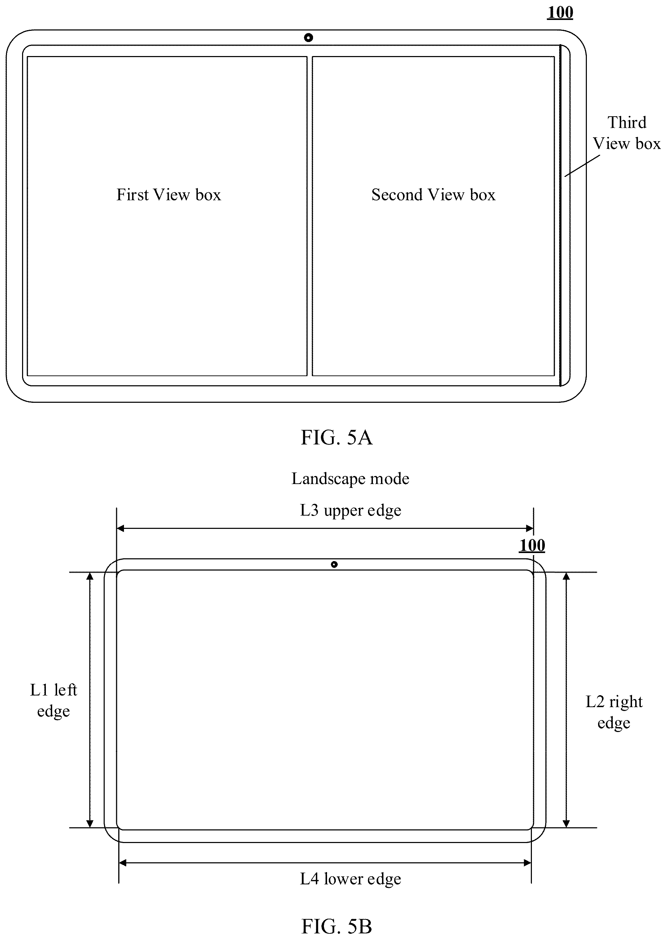

It is assumed that the first identifier is Topsplit, the four-dimensional coordinates of the first View box are (0.1 *Left, 0.9*Left, Height, 0.5* Height), the four-dimensional coordinates of the second View box are (0.1*Left, 0.9*Left, 0.4*Height, 0), and the four-dimensional coordinates of the third View box are (0.9*Left, Left, Height, 0). It is assumed that Left represents a length of the lower edge of the display screen, and Height represents the length of the left edge of the display region. In this case, an example diagram obtained after the electronic device adjusts the three View boxes according to the three four-dimensional coordinates may be shown in FIG. 5A.

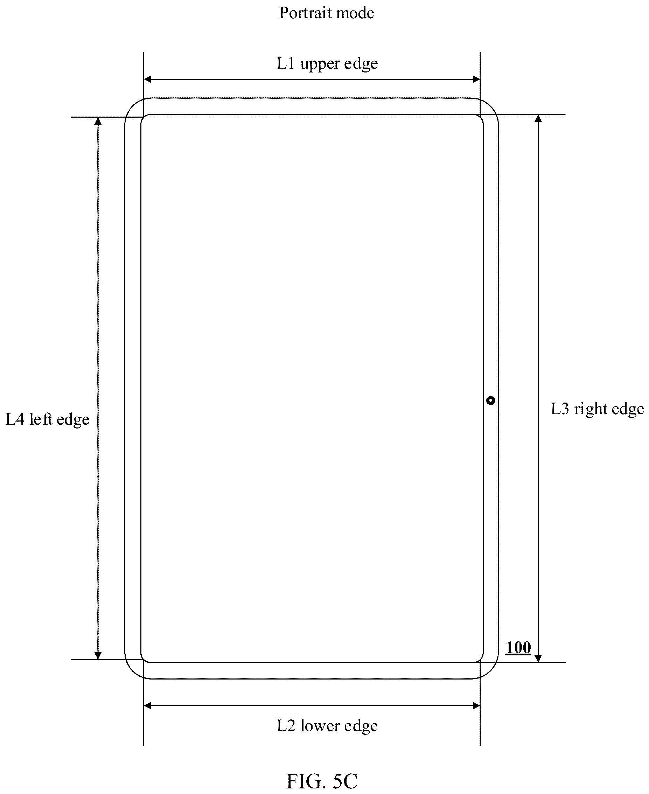

In some embodiments, definitions of the upper, lower, left, and right edges of the display screen are related to a display mode of the electronic device. The display mode of the electronic device may be classified into a landscape display mode and a portrait display mode. FIG. 5B is an example diagram of an electronic device in a landscape display mode. L1, L2, L3, and L4 are respectively a left edge, a right edge, an upper edge, and a lower edge of the display screen of the electronic device. Lengths of L3 and L4 are Left, and lengths of L1 and L2 are Height. FIG. 5C is an example diagram of an electronic device in a portrait mode. In this case, L4, L3, L1, and L2 are respectively a left edge, a right edge, an upper edge, and a lower edge of the electronic device. Lengths of L1 and L2 are Left, and lengths of L3 and L4 are Height.

S406: If the first application and/or the second application are applications supporting only top-bottom split-screen or left-right split-screen, the electronic device determines, based on the first location information, whether the first control is in a target hot zone.

Specifically, in the foregoing S402, if the application identifier of the first application and the application identifier of the second application are not both in the first whitelist, the first application and/or the second application are applications supporting only top-bottom split-screen or left-right split-screen. If the first application and/or the second application are applications supporting top-bottom split-screen or left-right split-screen, the electronic device determines, by using the regular hot zone method, whether to perform a screen splitting operation on the first application and the second application. To be specific, the electronic device determines, by determining whether the first control is in a hot zone range, whether to perform a screen splitting operation, and on the premise that the screen splitting operation is to be performed, determines to perform which type of screen splitting operation (for example, a top screen splitting operation for the first application, a bottom screen splitting operation for the first application, a left screen splitting operation for the first application, or a right screen splitting operation for the first application).

The electronic device may prestore location information (four-dimensional coordinates) of each hot zone in the display region. Meaning of the four-dimensional coordinates of the hot zone are consistent with that of the four-dimensional coordinates of the foregoing View box. The electronic device may determine a preset range of the hot zone in the display region of the electronic device by reading the four-dimensional coordinates of the hot zone. After obtaining the first location information, the electronic device may determine, based on the first location information and the range of the hot zone in the display region, whether the first control is in the hot zone. In other words, when two-dimensional coordinates of the first control are in the hot zone, the electronic device determines that the first control is in the hot zone, and a hot zone in which the first control is located is the target hot zone. On the contrary, the first control is not in the target hot zone. When the electronic device determines that the first control is in the hot zone, the electronic device triggers a screen splitting operation.

S407: If the first control is in the target hot zone, the electronic device adjusts a range, in the display region, of a View box in the display region based on a hot zone identifier of the target hot zone to obtain a first View box and a second View box, where the first View box is corresponding to the first application, and the second View box is corresponding to the second application.

Specifically, if the first control is in the target hot zone, the electronic device obtains identification information of the target hot zone, and the electronic device may determine, based on the obtained identification information, which type of screen splitting operation should be performed. For example, there is only a left hot zone and a right hot zone in the display region. If the right hot zone is the target hot zone, the electronic device determines to perform a screen splitting operation, and performs the right screen splitting operation for the first application that an interface of the first application is on the right. Then, the electronic device may select four-dimensional coordinates of each corresponding View box based on the identification information of the target hot zone; and adjust locations of top, bottom, left, and right sides of each View box in the display region according to the four-dimensional coordinates of each View box, to obtain the first View box displaying animation effect content of the first application and the second View box displaying animation effect content of the second application.

S408: The electronic device displays a second interface, where the second interface includes a first animation effect interface and a second animation effect interface, the first animation effect interface displays the animation effect content of the first application, the second animation effect interface displays the animation effect content of the second application, the first View box includes the first animation effect interface, and the second View box includes the second animation effect interface.

Specifically, after obtaining the first View box and the second View box, the electronic device displays the second interface. The second interface includes the first animation effect interface and the second animation effect interface, the first animation effect interface is used to display the animation effect content of the first application, and the second animation effect interface is used to display the animation effect content of the second application. The first View box includes the first animation effect interface, and the second View box includes the second animation effect interface.

For example, the first animation effect interface may be content displayed in the animation effect box 112 in FIG. 1C, or may be a shadow animation of the first application. The second animation effect interface may be content displayed in the animation effect box 111 in FIG. 1C, or may be a screenshot of the second application.

S409: The electronic device displays a third interface in response to a third operation for the first control, where the third interface includes a first split-screen interface and a second split-screen interface, the first split-screen interface is the interface of the first application, and the second split-screen interface is the interface of the second application.

For example, the third operation may be a hand raising operation for the drag bar 1011 in FIG. 1C.

The third interface includes the first split-screen interface and the second split-screen interface, the first split-screen interface is the interface of the first application, and the second split-screen interface is the interface of the second application.

For example, the third interface may be the user interface 12 in FIG. 1D, the first split-screen interface may be the interface 122 in FIG. 1D, and the second split-screen interface may be the interface 121 in FIG. 1D.

Optionally, before displaying the third interface, the electronic device may further display a transition animation of the first application in the first View box, and display a second transition animation of the second application in the second View box.

In the foregoing embodiment of FIG. 4, after detecting the first operation (for example, the touch and hold operation) performed by the user on the drag bar of the floating window, the electronic device responds to the first operation, and the electronic device determines whether an application corresponding to a current user interface and the application corresponding to the floating window are both applications supporting top-bottom split-screen and left-right split-screen. If yes, the electronic device performs a screen splitting operation by using the irregular hot zone method. If no, the electronic device performs a screen splitting operation in the regular hot zone manner. Regardless of whether the electronic device performs a screen splitting operation in the regular hot zone manner or performs a screen splitting operation in the irregular hot zone manner, the electronic device performs display by adjusting ranges of a plurality of View boxes on a same layer in the display region to obtain View boxes displaying animation effect content of two split-screen applications, and displays the animation effect content of the split-screen applications in corresponding View boxes. In this way, when a screen splitting operation is performed by using the irregular hot zone method, the following problem does not exist, that underlying code logic is complex due to adding a new layer for adding a new View box, which makes it difficult for a technician to perform technical maintenance in a later period.

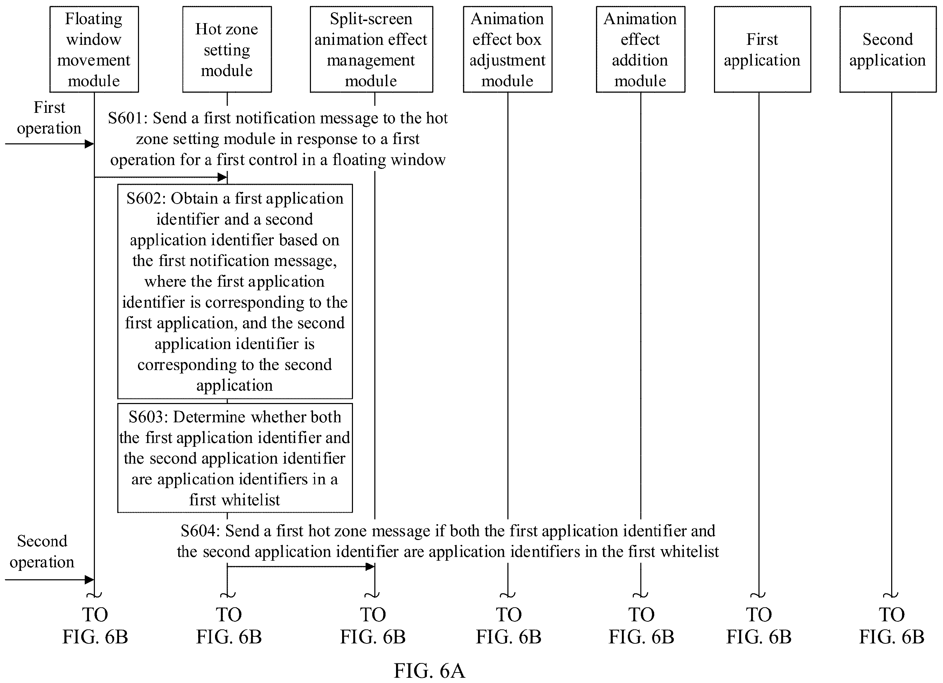

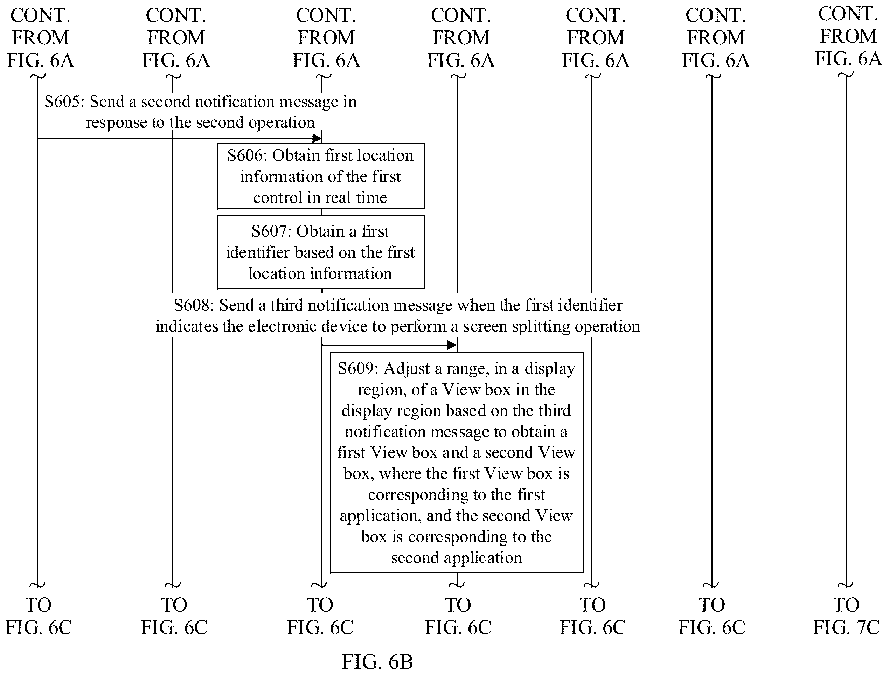

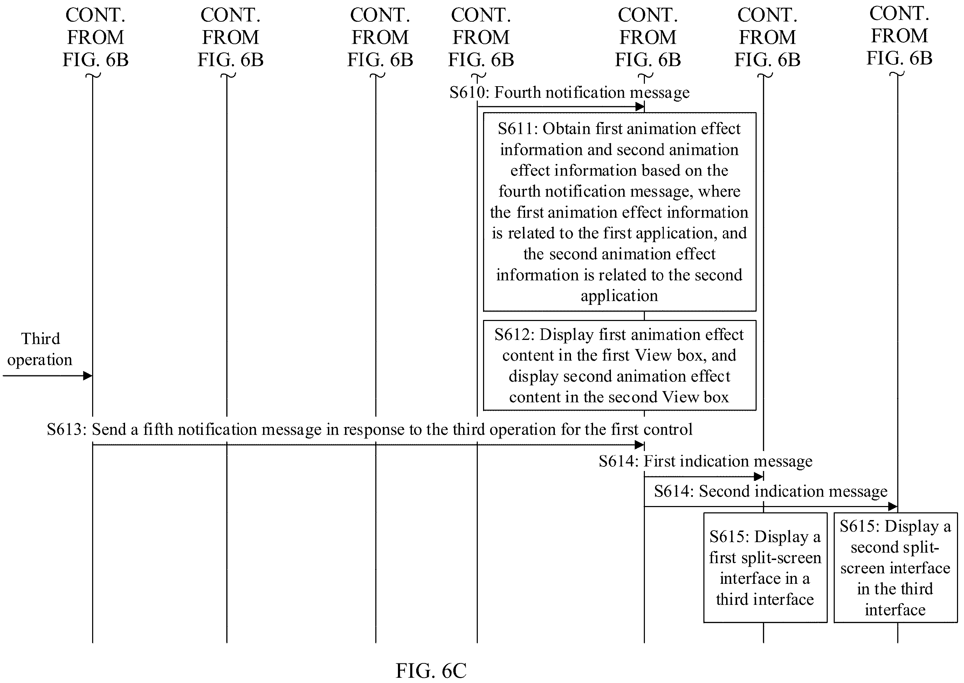

In the foregoing embodiment in FIG. 4, the procedure of the screen display method provided in this embodiment of this application is described. With reference to FIG. 6A to FIG. 6C, the following describes an interaction procedure between modules in the electronic device in the foregoing embodiment of FIG. 4. The electronic device includes the first application, the second application, and a multi-window management module (HwMultiWindowSwitchManager). The first application and the second application are located at an application layer in an Android system architecture, and the multi-window management module is located at an application framework layer in the Android system architecture.

The first application includes a floating window movement module (Bar movement module), and the multi-window management module includes a hot zone setting module (AddHotArea), a split-screen animation effect management module (SetDragAnimationListener), an animation effect addition module (HwMultiWinPushAcceptView), and an animation effect box adjustment module (HwMultiWinPushPendingDropView) module.

FIG. 6A to FIG. 6C are a diagram of interaction between modules in a screen display method according to an embodiment of this application. An interaction procedure between the modules is as follows:

S601: The floating window movement module sends a first notification message to the hot zone setting module in response to a first operation for a first control in a floating window.

For example, the first operation may be a touch and hold operation for the drag bar 1011 in the foregoing embodiment of FIG. 1A.

After detecting the first operation for the first control, the floating window movement module of the first application responds to the first operation, obtains a first application identifier and a second application identifier, and sends the first notification message to the hot zone setting module. The first notification message is used to indicate the hot zone setting module to determine a manner of triggering the electronic device to perform a screen splitting operation, that is, trigger, based on a regular hot zone method, the electronic device to perform a screen splitting operation or trigger, based on an irregular hot zone method, the electronic device to perform a screen splitting operation. The first notification message may include the first application identifier and may further include the second application identifier, the first application identifier is an application identifier of the first application, and the second application identifier is an application identifier of the second application.

S602: The hot zone setting module obtains the first application identifier and the second application identifier based on the first notification message, where the first application identifier is corresponding to the first application, and the second application identifier is corresponding to the second application.

S603: The hot zone setting module determines whether both the first application identifier and the second application identifier are application identifiers in a first whitelist.

Specifically, after obtaining the first application identifier and the second application identifier, the hot zone setting module obtains the first whitelist, and determines whether both the first application identifier and the second application identifier are application identifiers in the first whitelist. For related descriptions of the first whitelist, refer to related descriptions of the first whitelist in S402. Details are not described herein again in this embodiment of this application.

In some embodiments, the hot zone setting module may invoke a related interface based on a getPackageName function to obtain the first whitelist.

S604: If both the first application identifier and the second application identifier are application identifiers in the first whitelist, the hot zone setting module sends a first hot zone message to the split-screen animation effect management module.

Specifically, if both the first application identifier and the second application identifier are application identifiers in the first whitelist, the hot zone setting module determines that the first application and the second application are both applications supporting top-bottom split-screen and left-right split-screen.

In this case, the hot zone setting module sends the first hot zone message to the split-screen animation effect management module. The first hot zone message is used to indicate that the first application and the second application are both applications supporting top-bottom split-screen and left-right split-screen, that is, the split-screen animation effect module may trigger a screen splitting operation for the first application and the second application in the irregular hot zone-based manner.

In a possible implementation, after receiving the first hot zone message, the split-screen animation effect management module may enable a first monitor (onDragStared/onDragExited) and a second monitor (onDragEntered). The first monitor is configured to monitor current location information of the first control, and calculate a first identifier based on first location information. The second monitor is configured to determine which split-screen animation effect should be performed.

S605: The floating window movement module sends a second notification message to the split-screen animation effect management module in response to a second operation for the first control.

For example, the second operation may be an input operation of dragging the drag bar 1011 to the right by the user in the foregoing embodiment of FIG. 1B.

Specifically, after responding to the second operation for the first control, the floating window movement module sends the second notification message to the split-screen animation effect management module. The second notification message is used to indicate the split-screen animation effect management module to invoke the first monitor to calculate the first identifier based on a location (the first location information) of the first control.

S606: The split-screen animation effect management module obtains the first location information of the first control in real time.

Specifically, after receiving the second notification message in real time, the split-screen animation effect management module may detect, by using the first monitor, the first location information of the first control in a display region in real time.

S607: The split-screen animation effect management module obtains the first identifier based on the first location information.

Specifically, the split-screen animation effect management module has previously received the first hot zone message sent by the hot zone setting module. In this case, the split-screen animation effect module determines, in the irregular hot zone manner, whether to perform a screen splitting operation and to perform which type of screen splitting operation (left screen splitting for the first application, right screen splitting for the first application, top screen splitting for the first application, or bottom screen splitting for the first application).

The split-screen animation effect management module may invoke, by using the first monitor, a logical function H that calculates the first identifier. Then, the first monitor is invoked to output the first identifier based on the first location information and H. After calculating the first identifier, the first monitor sends the first identifier to the split-screen animation effect management module, so that the split-screen animation effect management module obtains the first identifier.

S608: When the first identifier indicates the electronic device to perform a screen splitting operation, the split-screen animation effect management module sends a third notification message to the animation effect box adjustment module.

Specifically, when the first identifier indicates the electronic device to perform a screen splitting operation, the split-screen animation effect management module sends the third notification message to the animation effect box adjustment module, where the third notification message is used to indicate the animation effect box adjustment module to adjust a range, in the display region, of a View box in the display region. The third notification message may include the first identifier.

S609: The animation effect box adjustment module adjusts the range, in the display region, of the View box in the display region based on the third notification message to obtain a first View box and a second View box, where the first View box is corresponding to the first application, and the second View box is corresponding to the second application.

Specifically, the animation effect box adjustment module obtains, based on the first identifier in the third notification message, four-dimensional coordinates of each View box corresponding to the first identifier; and adjusts, according to the obtained four-dimensional coordinates of each View box, locations of top, bottom, left, and right sides of each View box in the display region, to obtain the first View box displaying animation effect content of the first application and the second View box displaying animation effect content of the second application.

For related descriptions about that the animation effect box adjustment module adjusts the range, in the display region, of the View box in the display region based on the third notification message to obtain a first View box and a second View box, refer to related descriptions of S405 in the foregoing embodiment in FIG. 4. Details are not described herein again.

S610: The animation effect box adjustment module sends a fourth notification message to the animation effect addition module.

Specifically, after the animation effect box adjustment module adjusts the range, in the display region, of the View box in the display region based on the third notification message to obtain the first View box and the second View box, the animation effect box adjustment module may send the fourth notification message to the animation effect addition module. The fourth notification message is used to indicate the animation effect box addition module to add and display the animation effect content corresponding to the first application and the second application in the first View box and the second View box.

The fourth notification message may include the first identifier, and may further include a mapping relationship between identification information of the first View box and the first application, and a mapping relationship between identification information of the second View box and the second application.

S611: The animation effect addition module obtains first animation effect information and second animation effect information based on the fourth notification message, where the first animation effect information is related to the first application, and the second animation effect information is related to the second application.

Specifically, the animation effect addition module may determine, based on the first identifier, the mapping relationship between the identification information of the first View box and the first application, and the mapping relationship between the identification information of the second View box and the second application in the fourth notification message, split-screen animation effect content of the first application and the second application, that is, what content to be displayed in the first View box and the second View box.

For example, in FIG. 1C, split-screen animation effect content of the browser application (the second application) is the animation effect box 111 and the icon 1111 of the browser application, and split-screen animation effect content of the calculator application (the first application) is the animation effect box 112 and a gray background in the box thereof.

The animation effect addition module may invoke a related interface based on the first identifier to obtain the first animation effect information (for example, the gray background image of the animation effect box 112 in FIG. 1C) and the second animation effect information (for example, the icon 1111 of the browser application in FIG. 1C) in a storage region.

S612: The animation effect addition module displays first animation effect content in the first View box, and displays second animation effect content in the second View box.

Specifically, the first animation effect content is corresponding to the first animation effect information, and the second animation effect content is corresponding to the second animation effect information.

After obtaining the first animation effect information and the second animation effect information, the animation effect addition module may respectively correspondingly display a corresponding element in the first animation effect information (for example, the gray background image in the animation effect box 112 in FIG. 1C) and an element in the second animation effect information (for example, the icon 1111 of the browser application in FIG. 1C) in the first View box and the second View box based on the mapping relationship between the identification information of the first View box and the first application and the mapping relationship between the identification information of the second View box and the second application in the fourth notification message. Content displayed in the View box is content displayed in the first animation effect interface and the second animation effect interface in S408 in FIG. 4.

S613: The floating window movement module sends a fifth notification message to the animation effect addition module in response to a third operation for the first control.

For example, the third operation may be a hand raising operation for the drag bar 1011 in FIG. 1C.

The fifth notification message is used to represent that the electronic device is to display a third interface and end split-screen animation effect display.

S614: The animation effect addition module sends a first indication message to the first application, and sends a second indication message to the second application.

Specifically, after receiving the fifth notification message, the animation effect addition module may send the first indication message to the first application, and send the second indication message to the second application. The first indication message and the second indication message may include the first identifier.

For example, the animation effect addition module may respectively send the first indication message and the second indication message to the first application and the second application by using an Activity task management service module (HwInnerActivityTaskManagerService) located at an application layer of an Android system.

The first indication message is used to indicate an Activity task module (Activity Task) of the first application to close the floating window, so that the floating window no longer appears on a display screen of the electronic device. In addition, the first indication message is further used to indicate the Activity task module (Activity Task) of the first application to display a split-screen interface of the first application (a first split-screen interface) on the display screen.

A location of the split-screen interface of the first application may be determined based on the first identifier. For example, the first identifier represents top screen splitting for the first application. In this case, the first split-screen interface (for example, the first split-screen interface 141 shown in FIG. 1G) is above the second screen interface.

The second indication message is used to indicate an Activity task module (Activity Task) of the second application to display a split-screen interface of the second application (a second split-screen interface) on the display screen.

A location of the split-screen interface of the second application may be determined based on the first identifier. For example, the first identifier represents top screen splitting for the first application. In this case, the second split-screen interface (for example, the second split-screen interface 142 shown in FIG. 1G) is below the first screen interface.

Optionally, before sending the first indication message to the first application and sending the second indication message to the second application, the animation effect addition module may play, based on the first identifier, transition animation effect content with duration of t in the first View box and the second View box.

S615: The first application displays the first split-screen interface in the third interface, and the second application displays the second split-screen interface in the third interface.

Optionally, before displaying the first split-screen interface in the third interface, the first application closes the floating window by using the Activity task module.

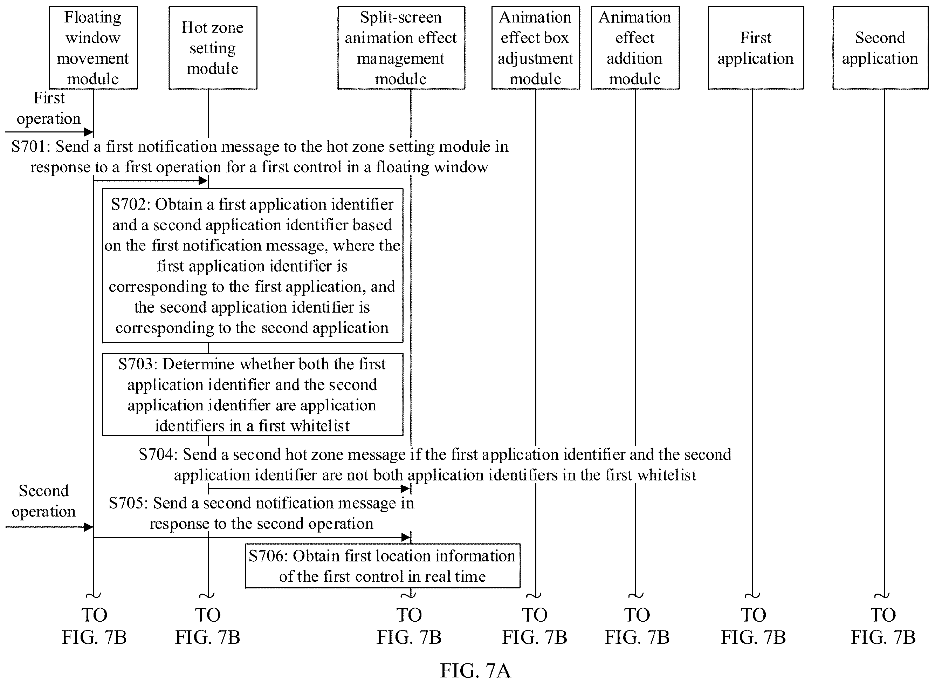

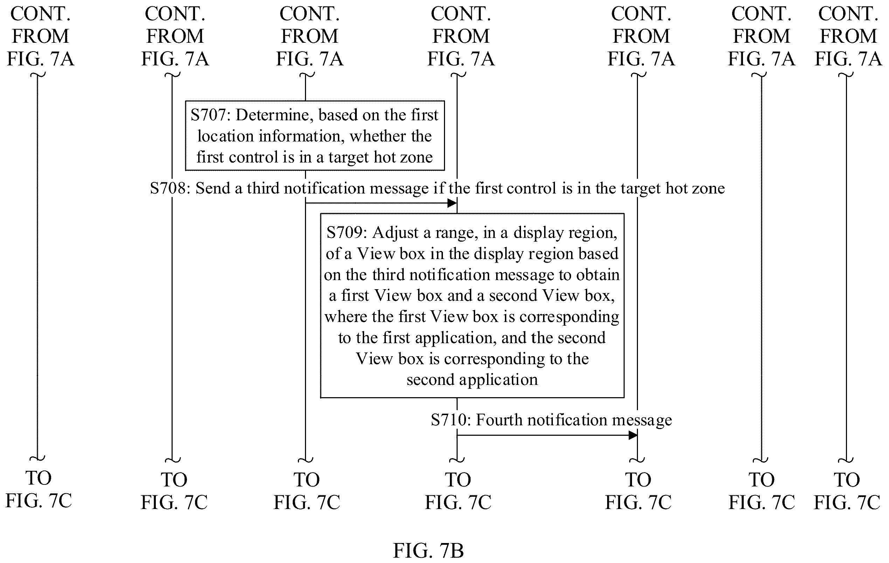

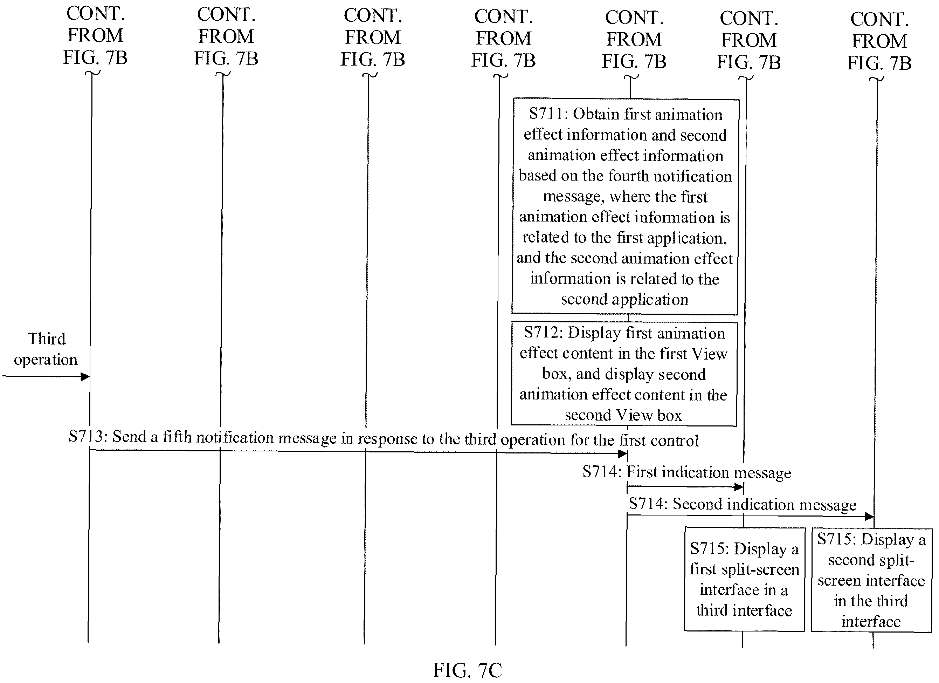

FIG. 7A to FIG. 7C are a diagram of interaction between modules in another screen display method according to an embodiment of this application. In the foregoing embodiment of FIG. 4, an interaction procedure between modules is as follows:

S701: The floating window movement module sends a first notification message to the hot zone setting module in response to a first operation for a first control in a floating window.

S702: The hot zone setting module obtains a first application identifier and a second application identifier based on the first notification message, where the first application identifier is corresponding to the first application, and the second application identifier is corresponding to the second application.

S703: The hot zone setting module determines whether both the first application identifier and the second application identifier are application identifiers in a first whitelist.

S704: If the first application identifier and the second application identifier are not both application identifiers in the first whitelist, the hot zone setting module sends a second hot zone message to the split-screen animation effect management module.

Specifically, if the first application identifier and the second application identifier are not both application identifiers in the first whitelist, the hot zone setting module determines that the first application and/or the second application are applications supporting only top-bottom split-screen or left-right split-screen.

In this case, the hot zone setting module sends the second hot zone message to the split-screen animation effect management module. The second hot zone message is used to represent that the first application and the second application are not both applications supporting top-bottom split-screen and left-right split-screen, that is, the split-screen animation effect module is prompted to trigger a screen splitting operation for the first application and the second application in a regular hot zone-based manner.

S705: The floating window movement module sends a second notification message to the split-screen animation effect management module in response to a second operation for the first control.

S706: The split-screen animation effect management module obtains first location information of the first control in real time.

Specifically, after receiving the second hot zone message, the split-screen animation effect management module may enable a first monitor (onDragStared/onDragExited) and a second monitor (onDragEntered). The first monitor is configured to monitor current location information of the first control, and determine whether the first control is in a hot zone. The second monitor is configured to determine which split-screen animation effect should be performed.

S707: The split-screen animation effect management module determines, based on the first location information, whether the first control is in a target hot zone.

Specifically, after obtaining the first location information, the split-screen animation effect module determines, based on the first location information (x, y) obtained by the first monitor and four-dimensional coordinates of a hot zone, whether a drag bar of the floating window is in the hot zone, that is, whether (x, y) is in a range defined by the four-dimensional coordinates of the hot zone. If the drag bar of the floating window is in the hot zone, the hot zone in which the drag bar of the floating window is located is the target hot zone. The split-screen animation effect module further obtains identification information of the target hot zone.

For related descriptions about that the split-screen animation effect management module determines, based on the first location information, whether the first control is in a target hot zone, refer to related descriptions about that the electronic device determines, based on the first location information, whether the first control is in a target hot zone in S406 in FIG. 4.

S708: If the first control is in the target hot zone, the split-screen animation effect management module sends a third notification message to the animation effect box adjustment module.

Specifically, the third notification message includes identification information of the target hot zone, and the identification information may be used to represent that which type of screen splitting operation is performed, for example, a top screen splitting operation, a bottom screen splitting operation, a left screen splitting operation, or a right screen splitting operation for the first application.

S709: The animation effect box adjustment module adjusts a range, in a display region, of a View box in the display region of the electronic device based on the third notification message to obtain a first View box and a second View box, where the first View box is corresponding to the first application, and the second View box is corresponding to the second application.

Specifically, the animation effect box adjustment module obtains, based on the identification information of the target hot zone in the third notification message, four-dimensional coordinates of each View box corresponding to the application identifier, and adjusts, according to the obtained four-dimensional coordinates of each View box, locations of top, bottom, left, and right sides of each View box in the display region, to obtain the first View box displaying animation effect content of the first application and the second View box displaying animation effect content of the second application.

S710: The animation effect box adjustment module sends a fourth notification message to the animation effect addition module.

S711: The animation effect addition module obtains first animation effect information and second animation effect information based on the fourth notification message, where the first animation effect information is related to the first application, and the second animation effect information is related to the second application.

S712: The animation effect addition module displays first animation effect content in the first View box, and displays second animation effect content in the second View box.

S713: The floating window movement module sends a fifth notification message to the animation effect addition module in response to a third operation for the first control.

S714: The animation effect addition module sends a first indication message to the first application, and sends a second indication message to the second application.

S715: The first application displays a first split-screen interface in a third interface, and the second application displays a second split-screen interface in the third interface.

For related descriptions of S701~S703 and S710~S715, refer to related descriptions of S601~S603 and S610~S615. Details are not described herein again.

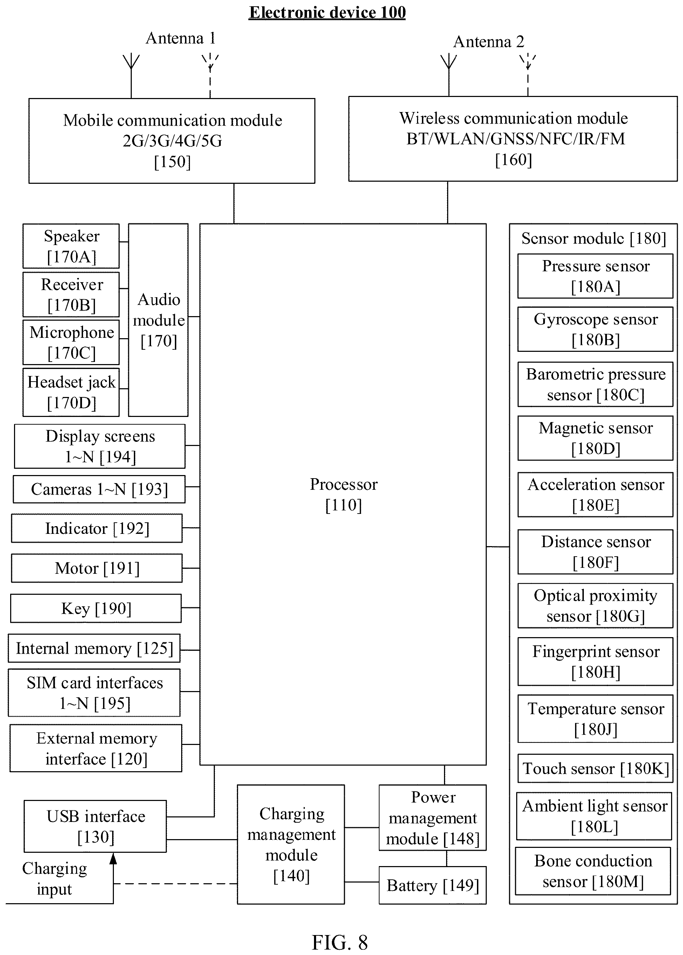

The following describes a structure of the electronic device 100. FIG. 8 is a schematic diagram of a hardware structure of an electronic device 100 according to an embodiment of this application.

The electronic device 100 may include a processor 110, an external memory interface 120, an internal memory 125, a universal serial bus (universal serial bus, USB) interface 130, a charging management module 140, a power management module 148, a battery 149, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an optical proximity sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in FIG. 8, some components may be combined, some components may be split, or there may be different component arrangements. The components shown in FIG. 8 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a solution for wireless communication that is applied to the electronic device 100 and that includes a wireless local area network (wireless local area networks, WLAN) (for example, a Wi-Fi network), Bluetooth (BlueTooth, BT), BLE broadcast, a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scenario. In some embodiments, the ISP may be disposed in the camera 193.

The digital signal processor is configured to process a digital signal, and may process another digital signal in addition to a digital image signal. For example, when the electronic device 100 selects a frequency, the digital signal processor is configured to perform Fourier transform and the like on frequency energy.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU.

The electronic device 100 may implement an audio function by using the audio module 170, the speaker 170A, the receiver 170B, the microphone 170C, the headset jack 170D, and the application processor. For example, music playback or audio recording is implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, the electronic device 100 may alternatively be provided with three, four, or more microphones 170C, to collect a sound signal, reduce noise, further identify a sound source, implement a directional recording function, and the like.

The pressure sensor 180A is configured to sense a pressure signal, and may convert the pressure signal into an electrical signal. In some embodiments, the pressure sensor 180A may be disposed on the display screen 194.

The touch sensor 180K is also referred to as a "touch panel". The touch sensor 180K may be disposed in the display screen 194. The touch sensor 180K and the display screen 194 form a touchscreen, also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a location different from that of the display screen 194.

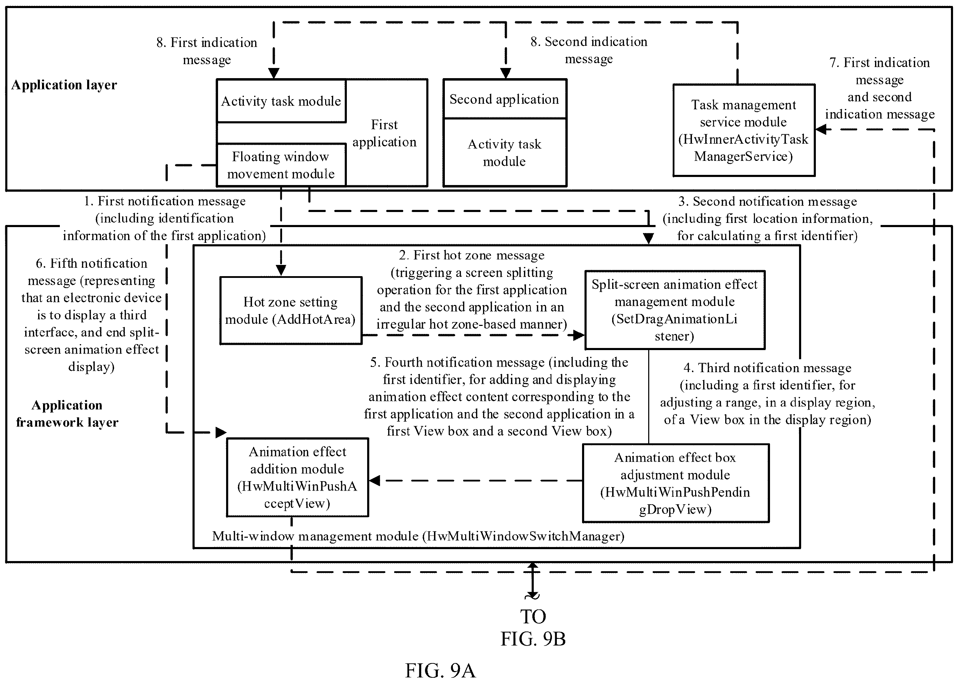

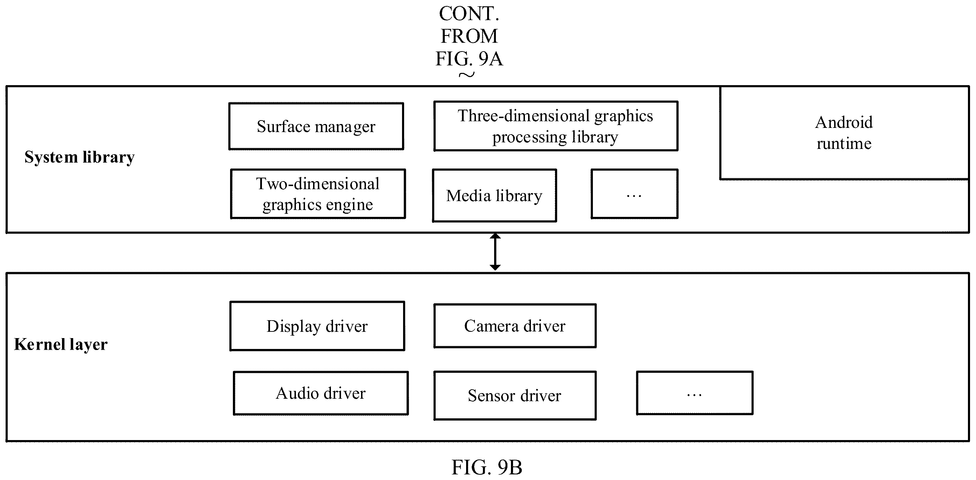

FIG. 9A and FIG. 9B are a block diagram of a software structure of an electronic device 100 when a screen splitting operation is performed in an irregular hot zone-based manner according to an embodiment of this application. In a layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages. As shown in FIG. 9A and FIG. 9B, the application package may include the first application, the second application, and the task management service module in the foregoing embodiments of FIG. 6A to FIG. 6C and FIG. 7A to FIG. 7C. Both the first application and the second application include an Activity task module, and the first application further includes a floating window movement module.

The floating window movement module is configured to: after responding to a first operation for a first control, send a first notification message to a hot zone setting module, to indicate the hot zone setting module to determine a manner of triggering the electronic device to perform a screen splitting operation.

The floating window and movement module is further configured to: after responding to a second operation for the first control, send a second notification message to a split-screen animation effect management module in real time, to indicate the split-screen animation effect management module to calculate a first identifier based on a location of the first control.

The floating window movement module is further configured to: in response to a third operation for the first control, send a fifth notification message to an animation effect addition module, to notify the animation effect addition module that the electronic device is to display a third interface, and end split-screen animation effect display.

The Activity task module in the first application is configured to: after receiving a first indication message, close a floating window, and display a first split-screen interface in the third interface.

The Activity task module in the second application is configured to: after receiving a second indication message, display a second split-screen interface in the third interface.

The task management service module is configured to: receive the first indication message and the second indication message that are sent by the animation effect addition module, send the first indication message to the Activity task module in the first application, and send the second indication message to the Activity task module in the second application.

The application framework layer provides an application programming interface (application programming interface, API) and a programming framework for an application at the application layer. The application framework layer includes some predefined functions. As shown in FIG. 9A and FIG. 9B, the application framework layer may include the multi-window management module in the foregoing embodiments of FIG. 6A to FIG. 6C and FIG. 7A to FIG. 7C.

The window management module includes the hot zone setting module, the split-screen animation effect management module, an animation effect box adjustment module, and the animation effect addition module.

The hot zone setting module is configured to: after receiving the first notification message sent by the floating window movement module, determine whether application identifiers of the first application and the second application are in a first whitelist; and if yes, send a first hot zone message to the split-screen animation effect management module, to indicate the split-screen animation effect module to trigger a screen splitting operation for the first application and the second application in an irregular hot zone-based manner.

The split-screen animation effect management module is configured to: receive the second notification message, calculate the first identifier, and send the first identifier to the animation effect box adjustment module.

The animation effect box adjustment module is configured to adjust a range of a View box in a display region based on the first identifier, to obtain a first View box and a second View box.

The animation effect box adjustment module is further configured to send a fourth notification message to the animation effect addition module, to indicate the animation effect addition module to add and display, in the first View box and the second View box, animation effect content corresponding to the first application and the second application.

The animation effect addition module is configured to: after receiving the fourth notification message, add and display the animation effect content corresponding to the first application and the second application in the first View box and the second View box.

The animation effect addition module is further configured to: after receiving the fifth notification message, send the first indication message and the second indication message to the task management service module.

The Android Runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

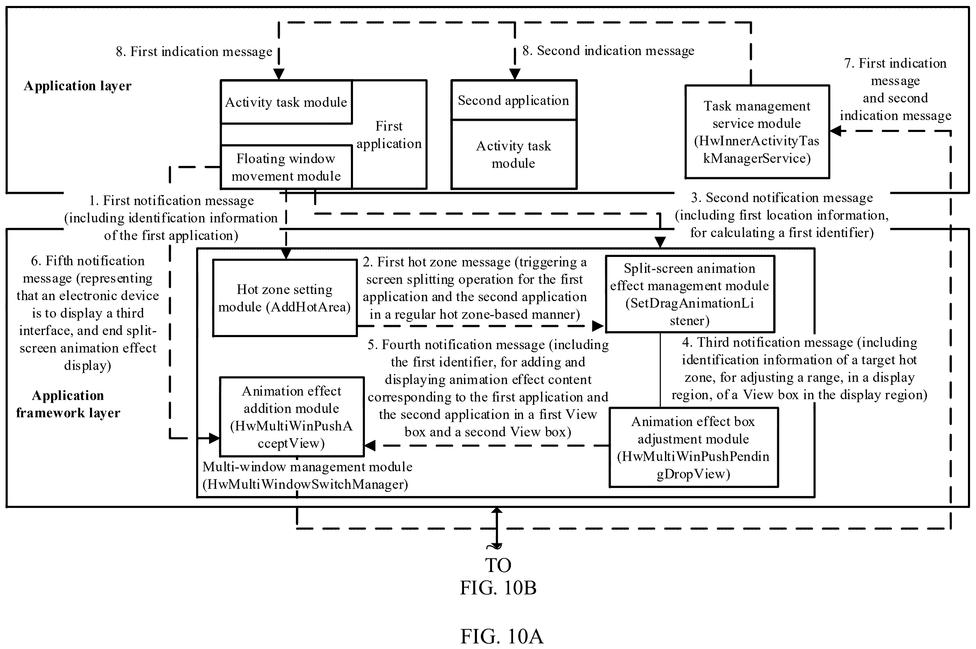

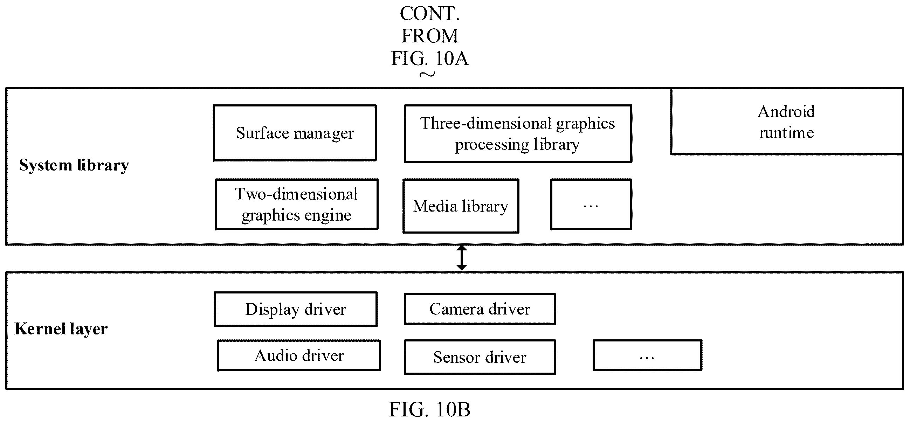

FIG. 10A and FIG. 10B are a block diagram of a software structure of an electronic device 100 when a screen splitting operation is performed in a regular hot zone-based manner according to an embodiment of this application.

A split-screen animation effect management module is configured to: receive a second notification message, determine whether a first control is in a target hot zone, and if the first control is in the target hot zone, send identification information of the target hot zone to an animation effect box adjustment module.

The animation effect box adjustment module is configured to adjust a range of a View box in a display region based on the identification information of the target information, to obtain a first View box and a second View box.

In FIG. 10A and FIG. 10B, for functions of another application and a functional module, refer to the foregoing corresponding descriptions in the embodiments in FIG. 7A to FIG. 7C and FIG. 9A and FIG. 9B. Details are not described herein again.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

In the method in embodiments of this application, the steps may be adjusted in sequence, combined, or deleted according to an actual requirement.

In the apparatus in embodiments of this application, the modules may be combined, divided, or deleted according to an actual requirement.

A person of ordinary skill in the art may understand that all or some of the processes of the methods in the foregoing embodiments may be implemented by a computer program instructing related hardware. The program may be stored in a computer-readable storage medium. When the program is executed, the processes in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. A screen display method, applied to an electronic device having a display screen, wherein the method comprises:
displaying a first interface, wherein a floating window is displayed in the first interface, the floating window comprises a first control, the floating window is corresponding to a first application, and the first interface is corresponding to a second application;
setting the floating window to a first mode in response to a first operation for the first control, wherein the first mode is a working mode in which the floating window is capable of moving on the display screen;
if the first application and the second application are both applications supporting top-bottom split-screen and left-right split-screen, separately determining one or more hot zones in upper, lower, left, and right directions of a display region of the display screen; or
if the first application and the second application are not both applications supporting top-bottom split-screen and left-right split-screen, separately determining one or more hot zones with a regular shape in the upper and lower directions or the left and right directions of the display region of the display screen;
responding to a second operation for the first control, and moving a location of the floating window on the display screen;
displaying a second interface when the first control moves to any hot zone range, wherein the second interface comprises a first View box and a second View box, the first View box displays animation effect content of the first application, the second View box displays animation effect content of the second application, and the first View box and the second View box are on a same layer; and
in a process of displaying the second interface, displaying a third interface in response to a third operation for the first control, wherein the third interface comprises a first split-screen interface and a second split-screen interface, the first split-screen interface is corresponding to the first application, and the second split-screen interface is corresponding to the second application.

2. The method according to claim 1, wherein the third interface further comprises a split-screen switching control, and after the displaying a third interface, the method further comprises:
in response to a fourth operation for the split-screen switching control, if the third interface is a top-bottom split-screen interface, switching the third interface to a left-right split-screen interface; or
if the third interface is a left-right split-screen interface, switching the third interface to a top-bottom split-screen interface.

3. The method according to claim 1 or 2, wherein before the responding to a second operation for the second control, the method further comprises:
obtaining a first application identifier and a second application identifier, wherein the first application identifier is identification information of the first application, and the second application identifier is identification information of the second application; and
determining whether both the first application identifier and the second application identifier are identification information in a first whitelist; wherein
if yes, the first application and the second application are both applications supporting top-bottom split-screen and left-right split-screen; or
if no, the first application and the second application are not both applications supporting top-bottom split-screen and left-right split-screen.

4. The method according to any one of claims 1-3, wherein the display region of the display screen comprises N rectangular-shaped View boxes, each View box comprises top, bottom, left, and right sides, and a location and a range of each View box in the display region are represented by using four-dimensional coordinates (Xi, Yi, Zi, Ki), wherein
Xi represents a distance between a left side of an ith View box and a first edge, Yi represents a distance between a right side of the ith View box and the first edge, Zi represents a distance between a top side of the ith View box and a second edge, and Ki represents a distance between a bottom side of the ith View box and the second edge, wherein the first edge is a side parallel to the left side and the right side of the display screen, the second edge is a side parallel to the top side and the bottom side of the display screen, and N is an integer greater than 1.

5. The method according to claim 4, wherein when the first application and the second application are both applications supporting top-bottom split-screen and left-right split-screen, the displaying a second interface specifically comprises:
obtaining first location information of the first control;
calculating a first identifier based on the first location information;
obtaining corresponding N four-dimensional coordinates of View boxes based on the first identifier;
correspondingly adjusting a range of each View box on the display screen based on the N four-dimensional coordinates to obtain the first View box and the second View box; and
displaying the animation effect content of the first application in the first View box, and displaying the animation effect content of the second application in the second View box.

6. The method according to claim 4, wherein when the first application and the second application are not both applications supporting top-bottom split-screen and left-right split-screen, the displaying a second interface specifically comprises:
obtaining first location information of the first control;
obtaining a range of a hot zone on the display screen based on four-dimensional coordinates of the hot zone;
when it is determined, based on the first location information, that the first control is in any hot zone, obtaining identification information of a hot zone in which the first control is located;
obtaining corresponding N four-dimensional coordinates of View boxes based on the identification information;
correspondingly adjusting a range of each View box on the display screen based on the N four-dimensional coordinates to obtain the first View box and the second View box; and
displaying the animation effect content of the first application in the first View box, and displaying the animation effect content of the second application in the second View box.

7. The method according to claim 1, wherein the electronic device comprises a split-screen animation effect management module, an animation effect box adjustment module, and an animation effect addition module, and if the first application and the second application are both applications supporting top-bottom split-screen and left-right split-screen, the displaying a second interface comprises:
calculating, by the split-screen animation effect management module, a first identifier based on first location information of the first control;
sending, by the split-screen animation effect management module, a third notification message to the animation effect box adjustment module, wherein the third notification message comprises the first identifier;
obtaining, by the animation effect box adjustment module, corresponding four-dimensional coordinates of N View boxes based on the first identifier;
adjusting, by the animation effect adjustment module, corresponding ranges of the N View boxes on the display screen based on the four-dimensional coordinates of the N View boxes to obtain the first View box and the second View box;
sending, by the animation effect adjustment module, a fourth notification message to the animation effect addition module, wherein the fourth notification message comprises the first identifier, a first mapping relationship between the first View box and the first application, and a second mapping relationship between the second View box and the second application;
obtaining, by the animation effect addition module, the animation effect content of the first application and the animation effect content of the second application based on the first identifier;
displaying, by the animation effect addition module, the animation effect content of the first application in the first View box based on the first mapping relationship; and
displaying, by the animation effect addition module, the animation effect content of the second application in the second View box based on the second mapping relationship.

8. The method according to claim 1, wherein the electronic device comprises a split-screen animation effect management module, an animation effect box adjustment module, and an animation effect addition module, and if the first application and the second application are not both applications supporting top-bottom split-screen and left-right split-screen, the displaying a second interface comprises:
sending, by the split-screen management module, a third notification message to the animation effect box adjustment module when determining, based on first location information of the first control, that the first control is in a hot zone range, wherein the third notification message comprises identification information of a hot zone in which the first control is located;
obtaining, by the animation effect box adjustment module, corresponding four-dimensional coordinates of N View boxes based on the identification information;
adjusting, by the animation effect adjustment module, corresponding ranges of the N View boxes on the display screen based on the four-dimensional coordinates of the N View boxes to obtain the first View box and the second View box;
sending, by the animation effect adjustment module, a fourth notification message to the animation effect addition module, wherein the fourth notification message comprises the identification information, a first mapping relationship between the first View box and the first application, and a second mapping relationship between the second View box and the second application;
obtaining, by the animation effect addition module, the animation effect content of the first application and the animation effect content of the second application based on the identification information;
displaying, by the animation effect addition module, the animation effect content of the first application in the first View box based on the first mapping relationship; and
displaying, by the animation effect addition module, the animation effect content of the second application in the second View box based on the second mapping relationship.

9. The method according to claim 7 or 8, wherein the electronic device further comprises a floating window movement module and a hot zone setting module of the first application, and before the displaying a second interface, the method further comprises:
sending, by the floating window movement module, a first notification message to the hot zone setting module in response to the first operation, wherein the first notification message comprises the first application identifier and the second application identifier, the first application identifier is identification information of the first application, and the second application identifier is identification information of the second application;
determining, by the hot zone setting module, whether both the first application identifier and the second application identifier are application identifiers in a first whitelist; and
if yes, sending, by the hot zone setting module, first hot zone information to the split-screen animation effect management module, wherein the first hot zone information is used to indicate that the first application and the second application are both applications supporting top-bottom split-screen and left-right split-screen; or
if no, sending, by the hot zone setting module, second hot zone information to the split-screen animation effect management module, wherein the second hot zone information is used to indicate that the first application and the second application are not both applications supporting top-bottom split-screen and left-right split-screen.

10. The method according to claim 9, wherein after the sending, by the hot zone setting module, first hot zone information to the split-screen animation effect management module or after the sending, by the hot zone setting module, second hot zone information to the split-screen animation effect management module, the method further comprises:
sending, by the floating window movement module, a second notification message to the split-screen animation effect management module in response to the second operation, wherein the second notification message is used to prompt the split-screen animation effect management module to obtain the first location information of the first control; and
obtaining, by the split-screen animation effect management module, the first location information of the first control in real time.

11. The method according to claim 7, wherein the electronic device further comprises a floating window movement module of a first hot zone, and after the displaying a second interface, the method further comprises:
sending, by the floating window movement module, a fifth notification message to the animation effect addition module in response to the third operation;
sending, by the animation effect addition module, a first indication message to the first application, wherein the first indication message comprises the first identifier;
sending, by the animation effect addition module, a second indication message to the second application, wherein the second indication message comprises the first identifier;
displaying, by the first application, the first split-screen interface in the third interface based on the first identifier; and
displaying, by the second application, the second split-screen interface in the third interface based on the first identifier.

12. The method according to claim 8, wherein the electronic device further comprises a floating window movement module of a first hot zone, and after the displaying a second interface, the method further comprises:
sending, by the floating window movement module, a fifth notification message to the animation effect addition module in response to the third operation;
sending, by the animation effect addition module, a first indication message to the first application, wherein the first indication message comprises the identification information;
sending, by the animation effect addition module, a second indication message to the second application, wherein the second indication message comprises the identification information;
displaying, by the first application, the first split-screen interface in the third interface based on the identification information; and
displaying, by the second application, the second split-screen interface in the third interface based on the identification information.

13. An electronic device, comprising a memory, a processor, and a touch control screen, wherein
the touch control screen is configured to display content;
the memory is configured to store a computer program, wherein the computer program comprises program instructions; and
the processor is configured to invoke the program instructions to enable the electronic device to perform the method according to any one of claims 1-12.

14. A computer-readable storage medium, wherein the computer-readable storage medium stores a computer program, and when the computer program is executed by a processor, the method according to any one of claims 1-13 is implemented.
